# EUROPEAN PATENT APPLICATION

(11) **EP 4 708 012 A1**
(43) Date of publication of application: **11.03.2026**
(21) Application number: 24870978.4
(22) Date of filing: 27.09.2024
(51) Int. Cl.: G06F 3/0486

(54) **DATA DRAGGING METHOD, AND ELECTRONIC DEVICE AND STORAGE MEDIUM**

(30) Priority: 28.09.2023 CN 202311292320
(71) Applicant: Huawei Technologies Co., Ltd., Shenzhen, Guangdong 518129 (CN)
(72) Inventor: HOU, Pengfei, Shenzhen, Guangdong 518129 (CN); REN, Han, Shenzhen, Guangdong 518129 (CN); ZHAO, Xueyuan, Shenzhen, Guangdong 518129 (CN); PENG, Hongxing, Shenzhen, Guangdong 518129 (CN); WEI, Ye, Shenzhen, Guangdong 518129 (CN); WANG, Zhangjun, Shenzhen, Guangdong 518129 (CN)
(74) Representative: Isarpatent
(86) International application number: PCT/CN2024/121803
(87) International publication number: WO 2025/067441

(57) **Abstract**

This application provides a data dragging method, an electronic device, and a storage medium. The electronic device includes a first application and a first drag operation recognition module. The first application receives a first operation on first data in the first application, where the first operation is a drag operation; the first application sends a first message to the first drag operation recognition module, where the first message indicates that the first operation is the drag operation; and the first drag operation recognition module obtains and saves first metadata information of the first data in response to the drag operation, where the metadata information of the first data includes any one or more of the following: a first data type of the first data, a creation time of the first data, a file size of the first data, an identifier of the application to which the first data belongs, and a storage location of the first data. In this method, after the application recognizes the drag operation, the application does not need to perform the drag operation, but hands over the drag operation to a drag framework for execution, so that workload of application development can be reduced.

## Description

This application claims priority to Chinese Patent Application No. 202311292320.4, filed with the China National Intellectual Property Administration on September 28, 2023 and entitled "DATA DRAGGING METHOD, ELECTRONIC DEVICE, AND STORAGE MEDIUM", which is incorporated herein by reference in its entirety.

### TECHNICAL FIELD

This application relates to the field of terminal technologies, and in particular, to a data dragging method, an electronic device, and a storage medium.

### BACKGROUND

As terminal devices are gradually popularized, intelligent terminal devices have become necessities in people's life. Users have increasing demand for drag operations across multiple terminal devices. A user can share data between two applications on a device through dragging, thereby improving user experience. However, a drag function currently supported by an application on the device is an application-defined function, that is, the application needs to support the drag function through software adaptation. If the application on the device does not adapt to the drag function, the user cannot share data through dragging.

### SUMMARY

This application provides a data dragging method, an electronic device, and a storage medium, so that an application on a device can support a drag function without adaptation, thereby reducing workload of application development.

According to a first aspect, this application provides a data dragging method. The method is applied to an electronic device. The electronic device includes an application layer and an application framework. The application layer includes a first application. The application framework includes a first drag framework. The first drag framework includes a first drag operation recognition module. The method includes: The first application receives a first operation on first data in the first application, where the first operation is a drag operation; the first application sends a first message to the first drag operation recognition module, where the first message indicates that the first operation is the drag operation; and the first drag operation recognition module obtains and saves first metadata information of the first data in response to the drag operation, where the metadata information of the first data includes any one or more of the following: a first data type of the first data, a creation time of the first data, a file size of the first data, an identifier of the application to which the first data belongs, and a storage location of the first data.

In this method, after the application recognizes the drag operation, the application does not need to perform the drag operation, but hands over the drag operation to the drag framework for execution. In this way, the application on the device can support a drag function without adaptation, and the application only needs to recognize a drag operation or a non-drag operation, so that workload of application development can be reduced.

With reference to the first aspect, in a possible implementation, after sending the first message, the method further includes: in response to the first message, the first drag operation recognition module stores an event type of the first operation as a first event, where the first event indicates that the first operation is the drag operation.

In this way, the first drag operation recognition module may store an operation type of the first operation that is the drag operation as the first event, to indicate that the first drag operation recognition module needs to respond to the first operation.

With reference to the first aspect, in a possible implementation, the application layer further includes a second application, and the method further includes: the second application receives a second operation on the second application; and the second application performs the second operation when the second operation is a non-drag operation.

The second application may be the same as or different from the first application.

After the application recognizes the second operation that is the non-drag operation, the second application may directly perform the second operation.

In some embodiments, while the first drag operation recognition module performs a drag operation, the second application may also perform a non-drag operation. In other words, the electronic device may simultaneously perform a drag operation and a non-drag operation, thereby improving operation experience of a user.

With reference to the first aspect, in a possible implementation, the application layer further includes a second application, and the method further includes: the second application receives a third operation on the second application; when the third operation is a drag operation, the second application sends a second message to the first drag operation recognition module, where the second message indicates that the second operation is the drag operation; and the first drag operation recognition module determines, in response to the second message, that the first event already exists, and skips performing the third operation.

The first drag operation recognition module has recorded the first operation as a drag operation, and cannot respond to the third operation that is a drag operation. In other words, the first drag operation recognition module can respond to only one drag operation at a same moment.

In another embodiment, the first drag operation recognition module can alternatively respond to a plurality of drag operations at a same moment. This is not limited in this application.

With reference to the first aspect, in a possible implementation, the first drag framework further includes a first drag animation display module, and after the first application receives the first operation on the first data in the first application, the method further includes: the first application obtains and displays a first picture, where the first picture is captured by the first application through screenshotting based on a display style of the first data; the first application sends the first picture to the first drag operation recognition module; the first drag operation recognition module sends the first picture to the first drag animation display module; and the first drag animation display module controls the first picture to move with the drag operation.

In this way, in a dragging process, the electronic device may display a dragged picture, and the dragged picture is captured by the first application through screenshotting. In this way, the first picture can be dragged across devices and applications.

With reference to the first aspect, in a possible implementation, the application layer further includes a second application, and a display area of the second application is a first display area; and after sending the first message, the method further includes: when a first icon is located on the first display area, the first drag operation recognition module sends the metadata information of the first data to the second application, where the first metadata information is used by the second application to determine whether to receive the first data.

The device cannot know that the user properly stops dragging the first data. When the first data is dragged to another application, the device sends the first metadata information of the first data to the another application, and the another application may determine whether the first data can be received.

With reference to the first aspect, in a possible implementation, after the first drag operation recognition module sends the metadata information of the first data to the second application, the method further includes: the second application obtains a second data type; the second application obtains the first data type from the metadata information of the first data; and when the second data type includes the first data type, the second application determines to receive the first data.

With reference to the first aspect, in a possible implementation, after the second application determines to receive the first data, the method further includes: the second application sends a third message to the first drag operation recognition module; and the first drag operation recognition module displays the first icon on the first picture in response to the third message, where the first icon indicates that the second application is allowed to receive the first data.

After the second application determines that the first data can be received, the first drag operation recognition module may refresh a display style of the dragged picture, to inform the user that the second application can receive the first data.

With reference to the first aspect, in a possible implementation, the method further includes: when the second data type does not include the first data type, the second application determines that the first data fails to be received; after determining that the first data fails to be received, the second application sends a fourth message to the first drag operation recognition module; and the first drag operation recognition module displays a second icon on the first picture in response to the fourth message, where the second icon indicates that the second application is incapable of receiving the first data, and the second icon is different from the first icon.

After the second application determines that the first data cannot be received, the first drag operation recognition module may also refresh the display style of the dragged picture, to inform the user that the second application cannot receive the first data.

With reference to the first aspect, in a possible implementation, the second data type includes any one or more of the following: a text, a picture, a hyperlink, a video, a file, an icon, a card, and a folder.

With reference to the first aspect, in a possible implementation, the second application is further configured to display the first data on a user interface of a third application in response to receiving the first data.

In some embodiments, the electronic device may further share the first data with another device through dragging. For example, the electronic device establishes a collaborative connection to another electronic device, the first drag framework further includes a first drag intention recognition module, the another device includes an application layer and an application framework, the application layer of the another device includes a third application, the application framework of the another device includes a second drag framework, and the second drag framework includes a second drag intention recognition module, a second drag operation recognition module, and a second drag animation display module, where
the first drag intention recognition module is configured to send the first metadata information and the first picture to the second drag intention recognition module through the collaborative connection when a first condition is met; the second drag intention recognition module is configured to send the first metadata information to the second drag operation recognition module; the second drag intention recognition module is further configured to send the first picture to the second drag animation display module; and the second drag animation display module is further configured to control the first picture to move with the drag operation.

In a possible implementation, the second drag intention recognition module is further configured to: when it is determined that the first picture is located in a display area of the third application, stop the drag operation and send the first data to the third application; and the third application is configured to receive the first data when determining to receive the first data.

According to a second aspect, this application provides an electronic device. The electronic device includes a memory and a processor. The memory is coupled to the processor. The memory is configured to store a computer program. When the processor invokes the computer program, the electronic device is enabled to perform the data dragging method provided in any possible implementation of the first aspect.

According to a third aspect, this application provides a computer-readable storage medium including instructions. When the instructions are run on an electronic device, the electronic device is enabled to perform the data dragging method provided in any possible implementation of the first aspect.

According to a fourth aspect, this application provides a chip system. The chip system includes one or more processors. The processor is configured to invoke computer instructions, so that an electronic device performs the data dragging method provided in any possible implementation of the first aspect.

According to a fifth aspect, this application provides a computer program product including instructions. When the computer program product is run on an electronic device, the electronic device is enabled to perform the data dragging method provided in any possible implementation of the first aspect.

For descriptions of beneficial effects in the second aspect to the fifth aspect, refer to descriptions of beneficial effects in the first aspect.

### BRIEF DESCRIPTION OF DRAWINGS

FIG. 1A to FIG. 1F show a specific implementation of sharing a picture in a gallery application with an instant messaging application;
FIG. 2A to FIG. 2I are diagrams for establishing a collaborative connection between an electronic device 100 and an electronic device 200;
FIG. 3A-1 to FIG. 3D-3 show a specific implementation of sharing a picture in a gallery application with an instant messaging application;
FIG. 4 is an interaction diagram of functional modules for sharing first data between two applications on an electronic device 100;
FIG. 5A to FIG. 5C are a schematic flowchart of a method for sharing first data between two applications on an electronic device 100 according to this application;
FIG. 6 is a schematic flowchart of a method for simultaneously responding to a drag operation and a non-drag operation by an electronic device 100 according to this application;
FIG. 7A and FIG. 7B are an interaction diagram of functional modules for sharing first data between two applications on an electronic device 100 and an electronic device 200;
FIG. 8A to FIG. 8C are a schematic flowchart of a method for sharing first data between two applications on an electronic device 100 and an electronic device 200 according to this application;
FIG. 9 is a diagram of a hardware structure of an electronic device according to this application; and
FIG. 10 is a diagram of a system framework according to this application.

### DESCRIPTION OF EMBODIMENTS

Terms used in the following embodiments of this application are merely intended to describe specific embodiments, but are not intended to limit this application. As used in the specification and the appended claims of this application, terms "one", "a", "an", "the", and "this" expressed in singular forms are also intended to include plural forms, unless otherwise specified in the context clearly. It should be further understood that the term "and/or" used in this application indicates and includes any or all possible combinations of one or more listed items.

Hereinafter, the terms "first" and "second" are merely intended for the purpose of description, and shall not be understood as an indication or implication of relative importance or an implicit indication of a quantity of indicated technical features. Therefore, a feature defined by "first" or "second" may explicitly or implicitly include one or more features. In the descriptions of embodiments of this application, unless otherwise specified, the term "a plurality of" means two or more.

A term "user interface (user interface, UI)" in the following embodiments of this application is a medium interface for interaction and information exchange between an application or an operating system and a user, and implements conversion between an internal form of information and a form acceptable to the user. A frequently-used representation form of the user interface is a graphical user interface (graphical user interface, GUI), and is a user interface that is displayed in a graphical manner and that is related to a computer operation. The user interface may be a visual interface element, for example, a text, an icon, a button, a menu, a tab, a text box, a dialog box, a status bar, a navigation bar, or a widget displayed on a display of a wearable device.

A dragging method provided in this application may be applied to data sharing between two applications on a same device, or may be applied to data sharing between two applications on different devices.

Specifically, an electronic device 100 may receive a drag operation performed by a user on first data in a first application, and share the first data with a second application on the electronic device 100. The first application may be the same as or different from the second application.

The electronic device 100 may also receive a drag operation performed by the user on the first data in the first application, and share the first data with a second application on an electronic device 200. The first application is the same as or different from the second application.

The drag operation includes but is not limited to a finger drag operation on a touchscreen, a stylus drag operation, a mouse drag operation, a touchpad drag operation, and the like. A specific implementation of the drag operation is not limited in this application.

This application provides a general-purpose drag framework. The drag framework defines a specific implementation of sharing data between two applications through dragging, for example, starting drag, ending drag, and presenting a drag animation. When data sharing is performed between two applications through dragging, the applications do not need to perform adaptation, but only need to be connected to the drag framework. The drag framework implements starting of drag, dynamic drawing of drag, a drag haptic feedback, and the like. Therefore, workload of application development is reduced.

First, dragging scenarios provided in this application are described.

### I. Scenario of dragging between two applications on a same device

For example, the first application may be a gallery application, and the second application may be an instant messaging application.

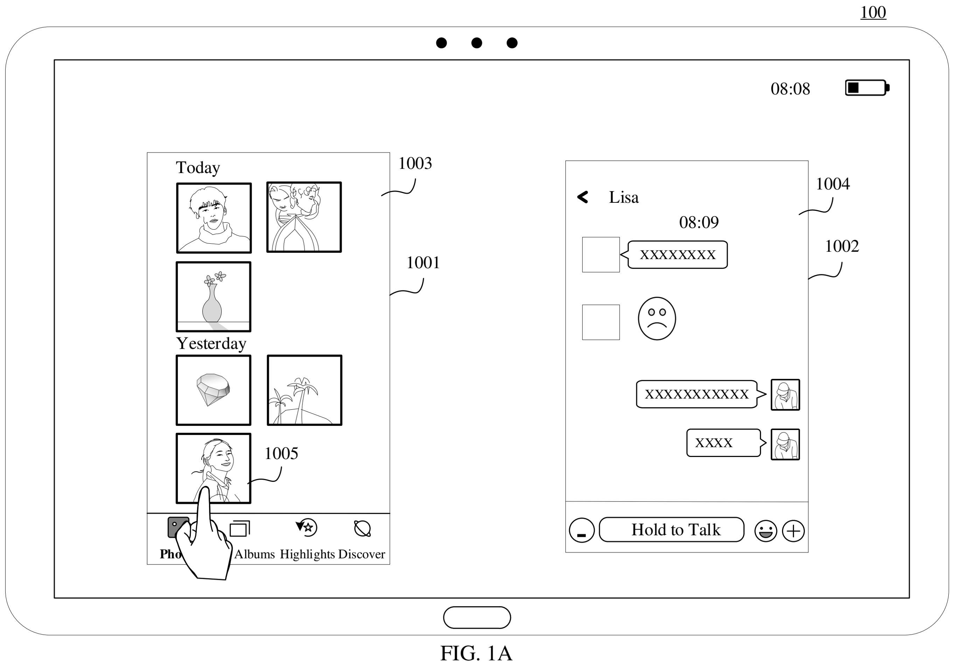

FIG. 1A to FIG. 1F show a specific implementation of sharing a picture in a gallery application with an instant messaging application.

For example, as shown in FIG. 1A, the electronic device 100 displays a window 1001 and a window 1002.

An interface 1003 of the gallery application is displayed in the window 1001, and an interface 1004 of the instant messaging application is displayed in the window 1002.

A plurality of pictures are displayed on the interface 1003, and the plurality of pictures may include a picture 1005.

A plurality of chat records with a contact "Lisa" are displayed on the interface 1004.

The user may share the picture 1005 with the contact "Lisa" by performing a drag operation. For example, as shown in FIG. 1A, the electronic device 100 may receive a touch-and-hold operation performed by the user on the picture 1005 on the interface 1003, and in response to the touch-and-hold operation of the user, the electronic device 100 may select the picture 1005 and drag the picture 1005.

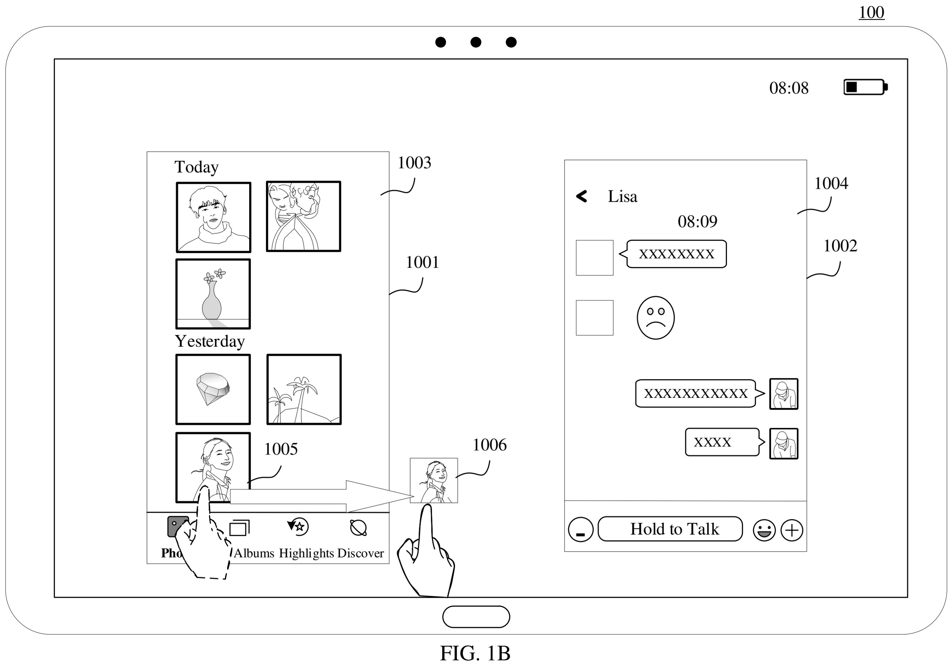

As shown in FIG. 1B, in response to the operation of dragging the picture 1005, the electronic device 100 may display an icon 1006, and the icon 1006 may be obtained by taking a screenshot of the picture 1005. A file type of the icon 1006 is a picture.

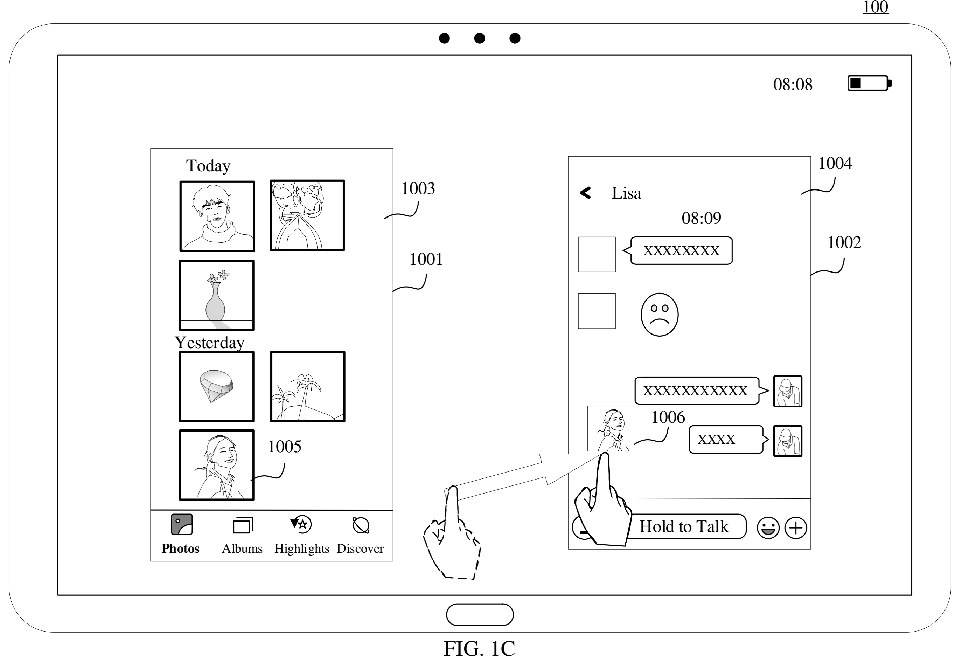

As shown in FIG. 1C, a finger of the user touches the screen and moves to the interface 1004, and the icon 1006 also moves with movement of the finger of the user. The icon 1006 is used to prompt the user with a drag track of the picture 1005.

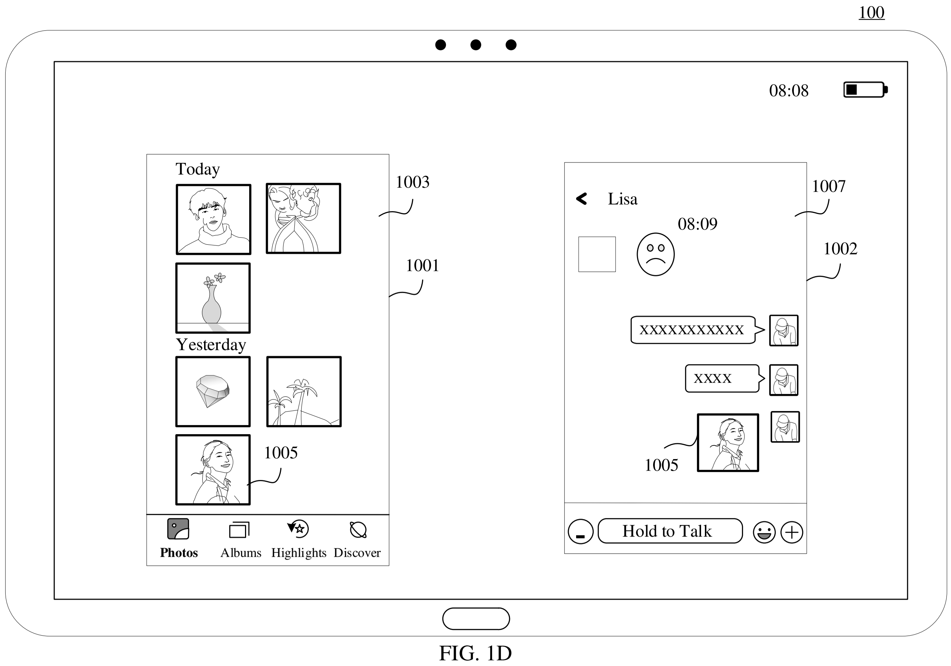

As shown in FIG. 1D, when the icon 1006 moves into the interface 1004, the user releases the finger. If the instant messaging application determines that the picture can be received, the electronic device 100 may send the picture 1005 to the contact "Lisa" by using the instant messaging application. The electronic device 100 may display an interface 1007 shown in FIG. 1D. The interface 1007 is similar to the interface 1004, and a difference lies in that the interface 1007 includes the picture 1005, to inform the user that the picture 1005 in the gallery application has been shared with the contact "Lisa" in the instant messaging application through dragging.

In some embodiments, a drag event may be sent to the second application before a drag completion operation. In a process in which the user drags the icon to move the drag icon, when the drag icon is located above the instant messaging application, for example, when the drag icon is located on the interface 1004 of the instant messaging application, the electronic device 100 may send the drag event to the instant messaging application, so that the instant messaging application can determine, based on metadata information of the picture 1005 in the drag event, whether the picture 1005 can be received. Because the electronic device 100 cannot know with which application the user shares the picture 1005, in the process in which the user drags the icon, the electronic device 100 may send the drag event to the instant messaging application provided that the drag icon is located in a display area of another application. The instant messaging application may predetermine whether the picture 1005 can be received. In this way, when the user stops dragging the icon, and the dragging is completed, the instant messaging application may determine, based on predetermining whether the picture 1005 can be received, whether to receive the picture 1005 or refuse to receive the picture 1005.

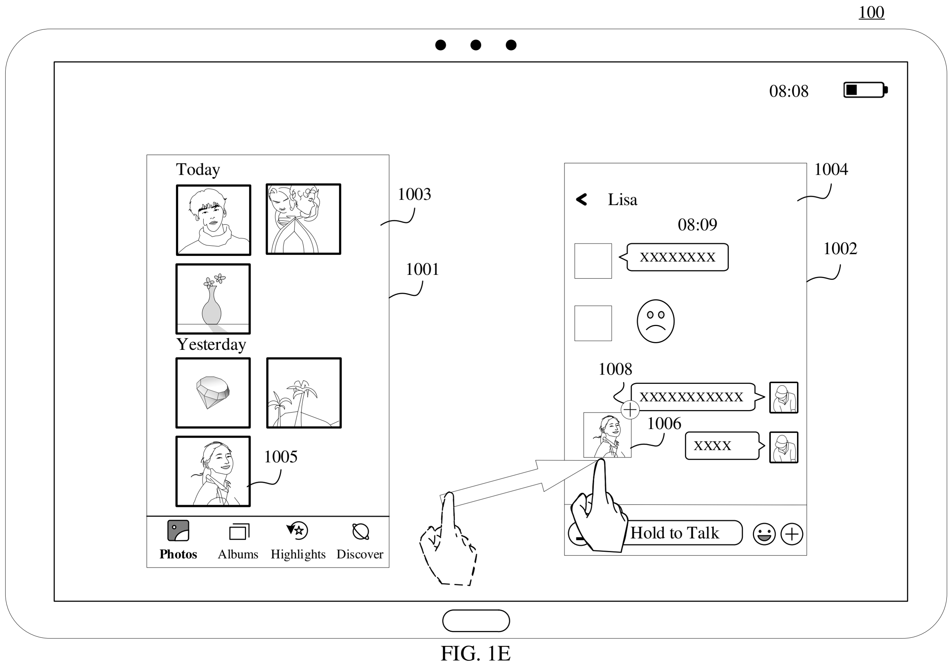

For example, when the instant messaging application determines that the picture 1005 can be received, the instant messaging application may send a notification to the drag framework, indicating that reception is allowed. The drag framework may display, on the icon 1006, an identifier 1008 shown in FIG. 1E, where the identifier 1008 indicates that the instant messaging application can receive the picture 1005. When the picture 1005 moves out of the interface 1004, displaying of the identifier 1008 on the icon 1006 is stopped.

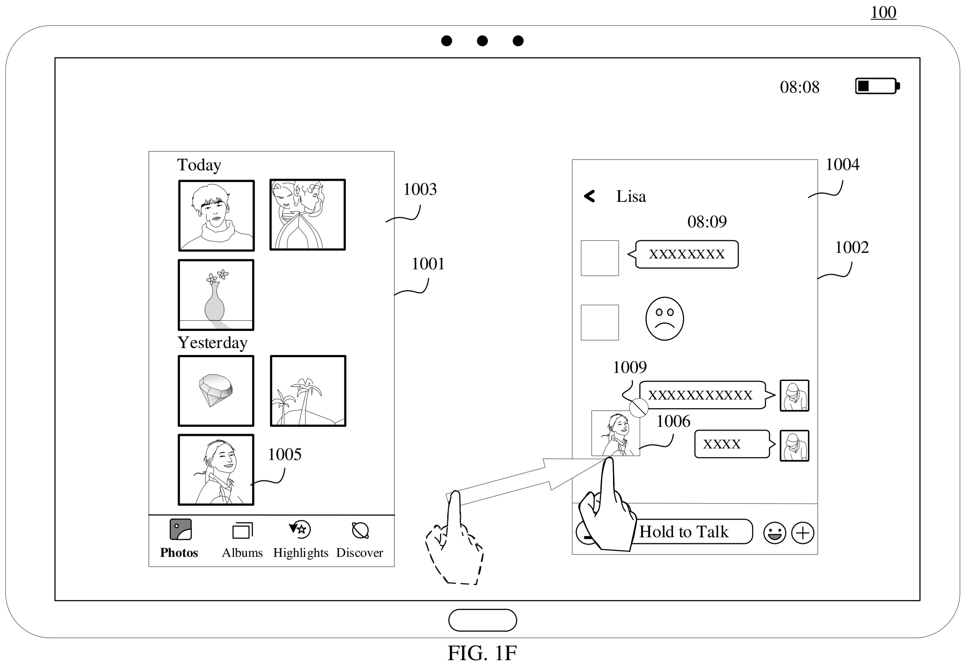

For example, when the instant messaging application determines that the picture 1005 cannot be received, the instant messaging application may send a notification to the drag framework, indicating that the picture 1005 cannot be received. The drag framework may display, on the icon 1006, an identifier 1009 shown in FIG. 1F, where the identifier 1009 indicates that the instant messaging application cannot receive the picture 1005. When the picture 1005 moves out of the interface 1004, displaying of the identifier 1009 on the icon 1006 is stopped.

The identifier 1008 is different from the identifier 1009.

It should be noted that FIG. 1A to FIG. 1F show only an example of a manner of sharing data through dragging across a plurality of windows. In another embodiment, the electronic device 100 may further share data between two applications in another manner, for example, sharing data by split-screen dragging or sharing data by staging-area dragging. This is not limited in this application.

### II. Scenario of dragging between two applications on different devices

The first application is installed on the electronic device 100, and the second application is installed on the electronic device 200. A collaborative connection is established between the first application and the second application. For example, the collaborative connection may be a Bluetooth connection, or the collaborative connection may be another connection. This is not limited in this application.

### 1. The electronic device 100 establishes a collaborative connection to the electronic device 200.

In a possible implementation, the electronic device 100 may establish a connection to a mouse 300 (not shown in the figure), and the electronic device 200 may also establish a connection to the mouse 300.

The mouse 300 controls the electronic device 100, and a mouse pointer of the mouse 300 is displayed on a screen of the electronic device 200.

When the user controls, by using the mouse 300, the mouse pointer to traverse a screen boundary of the electronic device 100 and move to the screen of the electronic device 200, the electronic device 100 may automatically establish a collaborative connection to the electronic device 200.

After the electronic device 100 establishes the collaborative connection to the electronic device 200, the mouse 300 may switch between controlling the electronic device 100 and controlling the electronic device 200, to achieve an objective of controlling multiple devices by using one mouse.

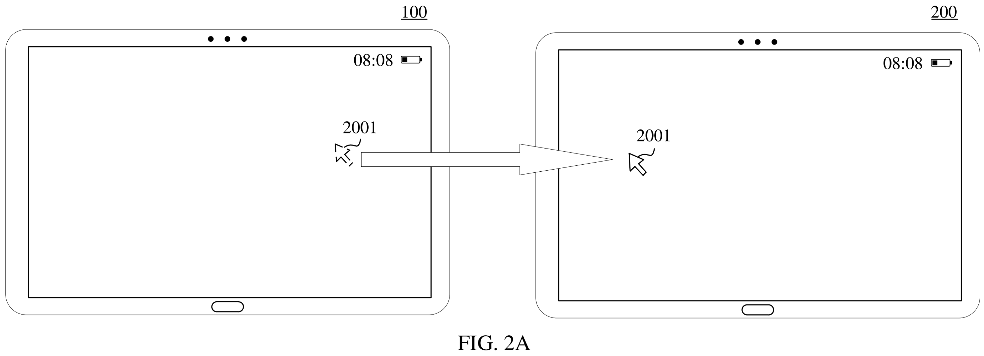

For example, as shown in FIG. 2A, the electronic device 100 may establish a connection to the mouse 300, the mouse 300 is configured to control the electronic device 100, and a mouse pointer 2001 of the mouse 300 is displayed on the screen of the electronic device 200. When the user controls the mouse 300 to move the mouse pointer 2001 toward the electronic device 200, for example, as shown in FIG. 2A, the user may control, by using the mouse 300, the mouse pointer 2001 to traverse a right edge of the electronic device 100, and the mouse pointer 2001 disappears from the screen of the electronic device 100. Then the mouse pointer 2001 traverses a left edge of the electronic device 200, and is displayed on the screen of the electronic device 200.

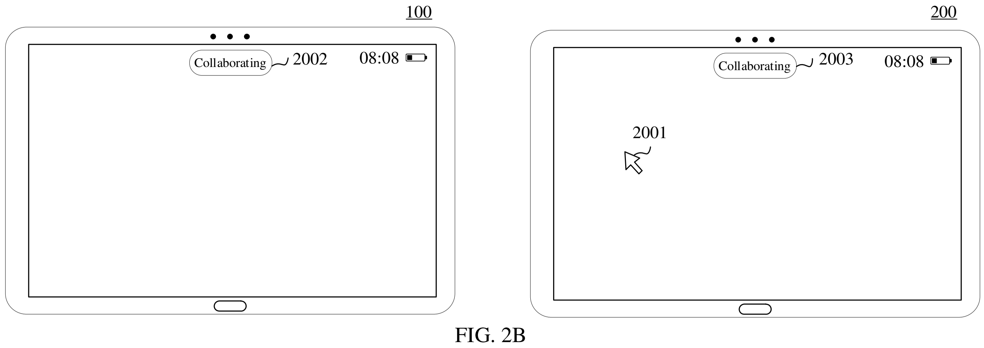

As shown in FIG. 2B, after the user controls, by using the mouse 300, the mouse pointer 2001 to traverse the right edge of the electronic device 100 and the left edge of the electronic device 200, and the mouse pointer 2001 is displayed on the screen of the electronic device 200, the electronic device 100 may automatically establish a collaborative connection to the electronic device 200.

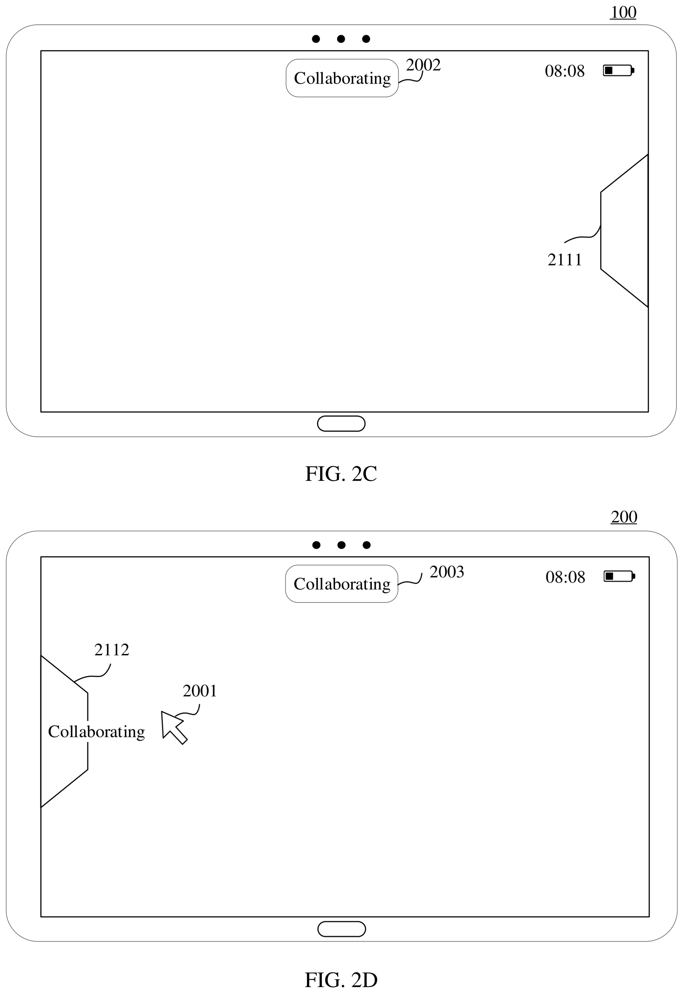

Optionally, after the user controls, by using the mouse 300, the mouse pointer 2001 to traverse the right edge of the electronic device 100 and the left edge of the electronic device 200, and the mouse pointer 2001 is displayed on the screen of the electronic device 200, the electronic device 100 may display a special effect on the display of the electronic device 100, and the electronic device 200 may display a special effect on the display of the electronic device 200, where the special effect indicates that the electronic device 200 is to establish a collaborative connection to the electronic device 100. In some embodiments, the special effect may be a bubble special effect. In some embodiments, the electronic device 100 may display a special effect 2111 shown in FIG. 2C, and the electronic device 200 may display a special effect 2112 shown in FIG. 2D. The special effect 2112 shows a text "Collaborating", and the special effect 2111 and the special effect 2112 indicate that the electronic device 100 is establishing a collaborative connection to the electronic device 200. Optionally, after the electronic device 100 successfully establishes the collaborative connection to the electronic device 200, the electronic device 100 and the electronic device 200 may stop displaying the special effect 2111 and the special effect 2112.

In response to establishing the collaborative connection between the electronic device 100 and the electronic device 200, the electronic device 100 may display prompt information 2002 shown in FIG. 2B, and the electronic device 200 may display prompt information 2003 shown in FIG. 2D. The prompt information 2002 and the prompt information 2003 are used to indicate that the collaborative connection has been established between the electronic device 100 and the electronic device 200.

In some embodiments, after the electronic device 100 establishes the collaborative connection to the electronic device 200, the user may control, by using the mouse 300, the electronic device 200 to establish a collaborative connection to an electronic device 400. Optionally, after the electronic device 200 establishes the collaborative connection to the electronic device 400, the electronic device 100 may automatically establish a collaborative connection to the electronic device 400. In this way, a collaborative connection is established between every two of the electronic device 100, the electronic device 200, and the electronic device 400.

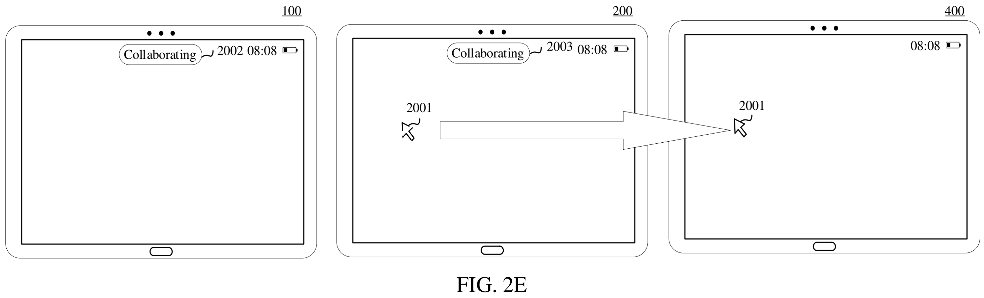

For example, as shown in FIG. 2E, the user may control, by using the mouse 300, the mouse pointer 2001 to traverse a right edge of the electronic device 100, and the mouse pointer 2001 disappears from the screen of the electronic device 200. Then the mouse pointer 2001 traverses a left edge of the electronic device 400, and is displayed on a screen of the electronic device 400.

As shown in FIG. 2E, after the user controls, by using the mouse 300, the mouse pointer 2001 to traverse the right edge of the electronic device 200 and the left edge of the electronic device 400, and the mouse pointer 2001 is displayed on the screen of the electronic device 400, the electronic device 400 may automatically establish a collaborative connection to the electronic device 200.

Optionally, after the electronic device 400 establishes the collaborative connection to the electronic device 200, and the electronic device 100 establishes the collaborative connection to the electronic device 200, the electronic device 400 may automatically establish a collaborative connection to the electronic device 100. In this way, a collaborative connection is established between every two of the electronic device 100, the electronic device 200, and the electronic device 400.

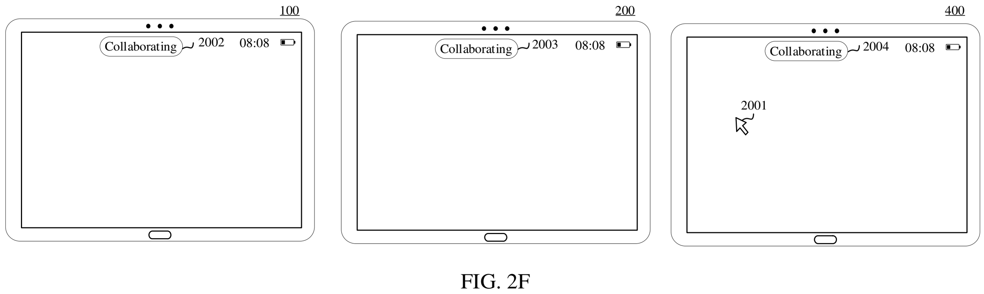

In response to establishing the collaborative connection between the electronic device 400 and the electronic device 200, the electronic device 400 may display prompt information 2004 shown in FIG. 2F, where the prompt information 2004 indicates that the electronic device 400 has established collaborative connections to the electronic device 100 and the electronic device 200.

In this way, user operations required for establishing collaborative connections between multiple devices can be reduced, and device collaboration efficiency is improved.

In some embodiments, after multiple devices establish collaborative connections to each other, the user may perform an operation on any device to disconnect collaborative connections between the device and a plurality of other devices, while the plurality of other devices still have collaborative connections established to each other.

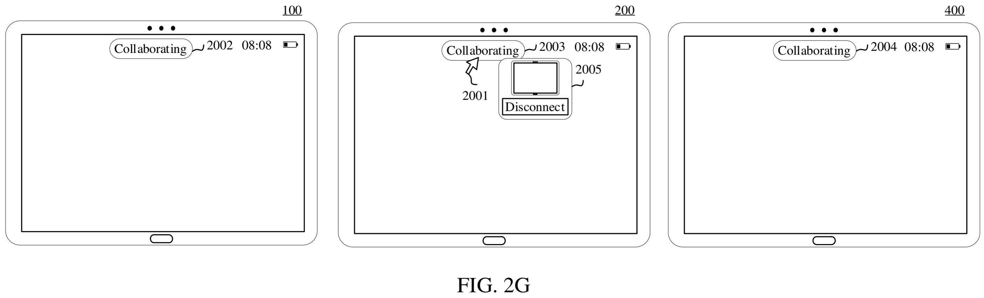

For example, as shown in FIG. 2G, the electronic device 200 may receive an input operation of the user on the prompt information 2003. The input operation may be an operation that is performed by the user by controlling, by using the mouse 300, the mouse pointer 2001 to hover over the prompt information 2003 and clicking the prompt information 2003. In response to the input operation of the user, the electronic device 200 may display a prompt bar 2005 shown in FIG. 2G. The prompt bar 2005 includes a "Disconnect" option. The user may separately disconnect the collaborative connection between the electronic device 200 and the electronic device 100 and the collaborative connection between the electronic device 200 and the electronic device 400 by using the "Disconnect" option.

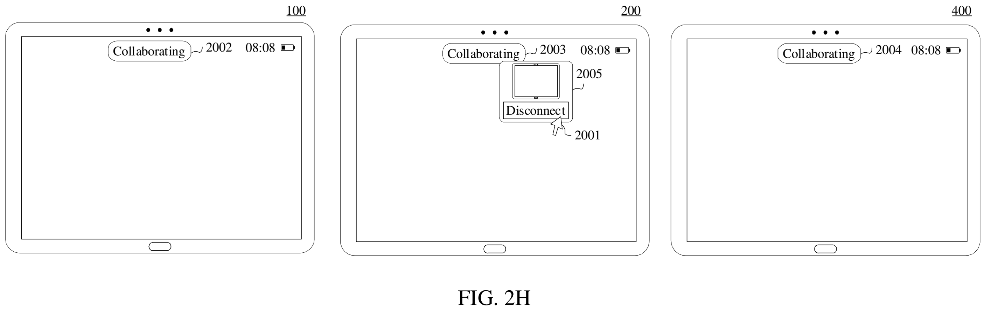

For example, as shown in FIG. 2H, the electronic device 200 may receive an input operation of the user on the "Disconnect" option in the prompt bar 2005. The input operation may be an operation that is performed by the user by controlling, by using the mouse 300, the mouse pointer 2001 to hover over the "Disconnect" option and clicking the "Disconnect" option. In response to the input operation of the user, the electronic device 200 may separately disconnect the collaborative connection between the electronic device 200 and the electronic device 100 and the collaborative connection between the electronic device 200 and the electronic device 400.

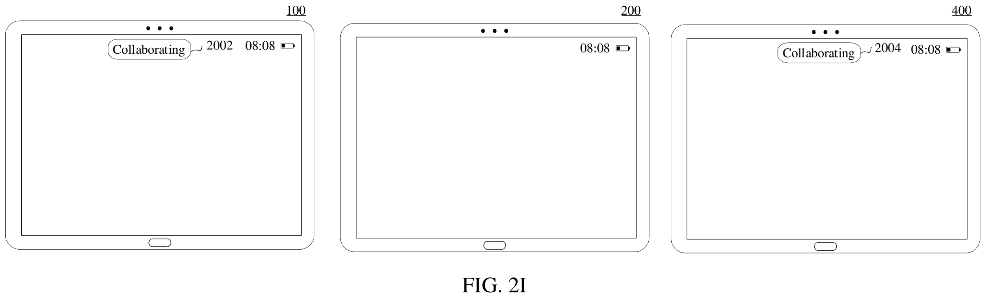

As shown in FIG. 2I, in response to separately disconnecting the collaborative connection between the electronic device 200 and the electronic device 100 and the collaborative connection between the electronic device 200 and the electronic device 400, the electronic device 200 may stop displaying the prompt information 2004, to inform the user that the electronic device 200 has not established collaborative connections to the electronic device 100 and the electronic device 400.

After the electronic device 200 separately disconnects the collaborative connection between the electronic device 200 and the electronic device 100 and the collaborative connection between the electronic device 200 and the electronic device 400, the electronic device 100 still displays the prompt information 2002, and the electronic device 400 still displays the prompt information 2004, to inform the user that the electronic device 100 is still collaboratively connected to the electronic device 400.

### 2. The electronic device 100 shares the first data in the first application with the second application on the electronic device 200.

In another embodiment, after the electronic device 100 establishes a collaborative connection to the electronic device 200, and the electronic device 200 establishes a collaborative connection to the electronic device 400, the electronic device 100 may automatically establish a collaborative connection to the electronic device 400. The electronic device 100 may receive a user operation and directly share the first data on the electronic device 100 with the electronic device 400 by performing a drag operation, without using the electronic device 200 to share the first data on the electronic device 100 with the electronic device 400 by performing a drag operation, thereby reducing user operations.

For example, the first application may be a gallery application, and the second application may be an instant messaging application.

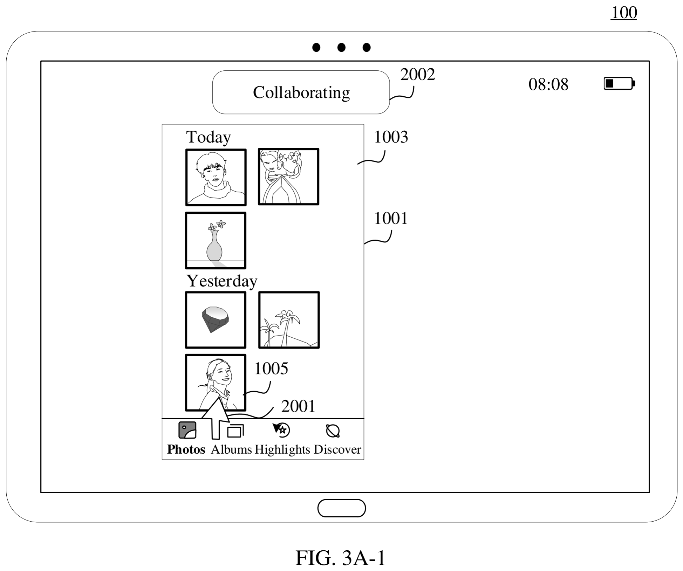

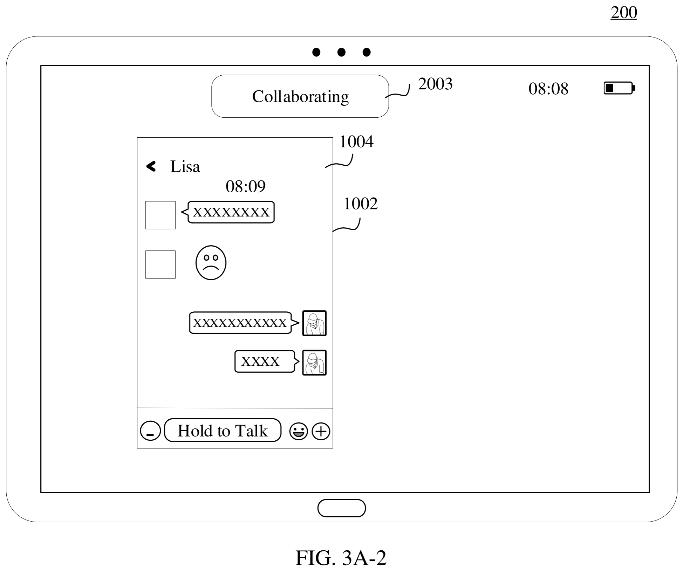

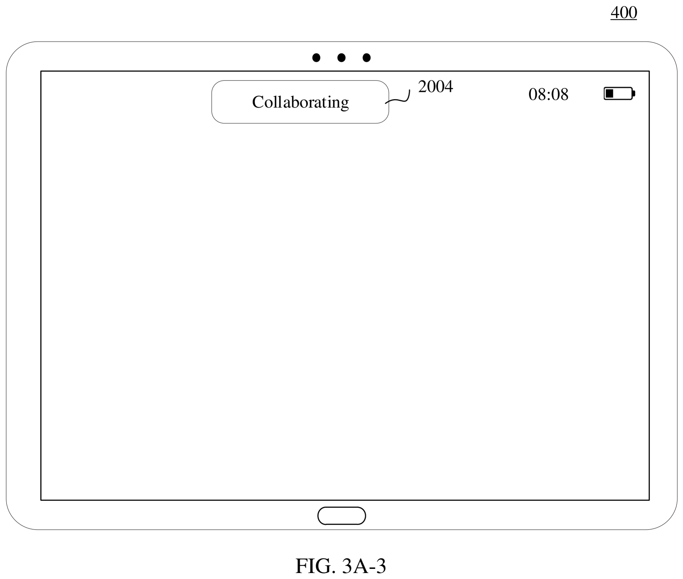

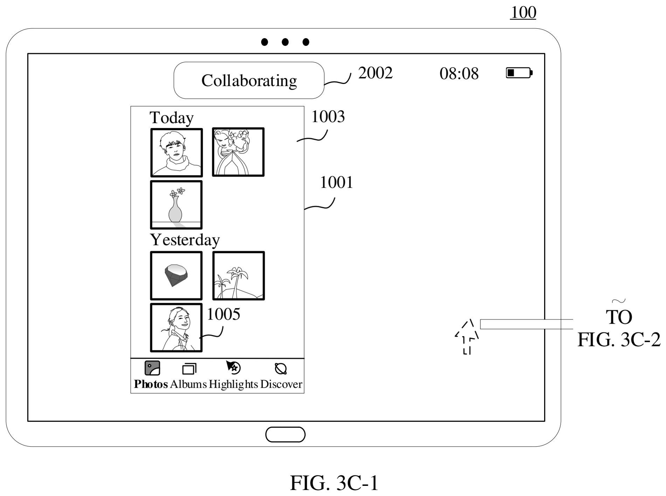

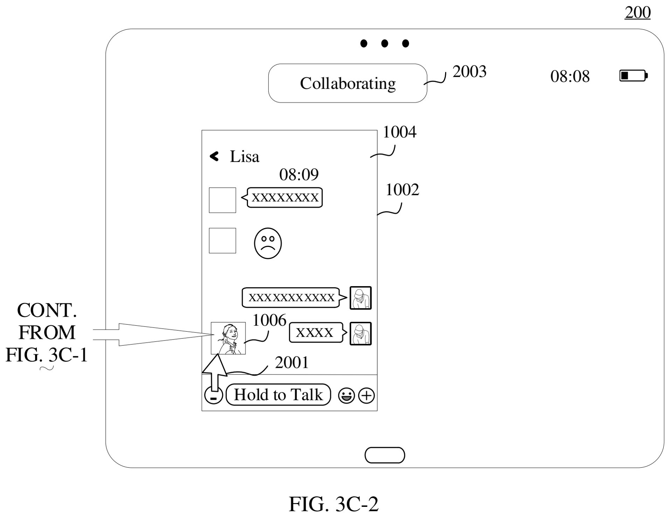

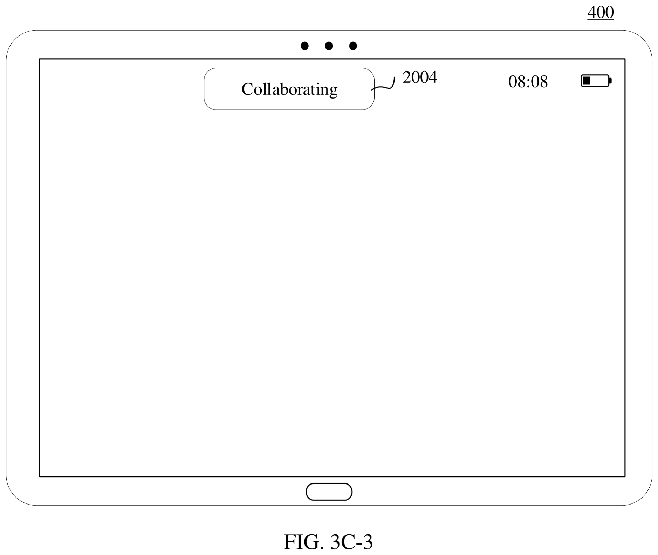

FIG. 3A-1 to FIG. 3D-3 show a specific implementation of sharing a picture in a gallery application with an instant messaging application.

For example, as shown in FIG. 3A-1 and FIG. 3A-2, the electronic device 100 displays a window 1001, and the electronic device 200 displays a window 1002.

An interface 1003 of the gallery application is displayed in the window 1001, and an interface 1004 of the instant messaging application is displayed in the window 1002.

A plurality of pictures are displayed on the interface 1003, and the plurality of pictures may include a picture 1005.

A plurality of chat records with a contact "Lisa" are displayed on the interface 1004.

The user may share the picture 1005 with the contact "Lisa" by performing a drag operation. For example, as shown in FIG. 3A-1, the electronic device 100 may receive a touch-and-hold operation that is performed by the user on the picture 1005 on the interface 1003 by using a mouse 300, and in response to the touch-and-hold operation of the user, the electronic device 100 may select the picture 1005 and drag the picture 1005.

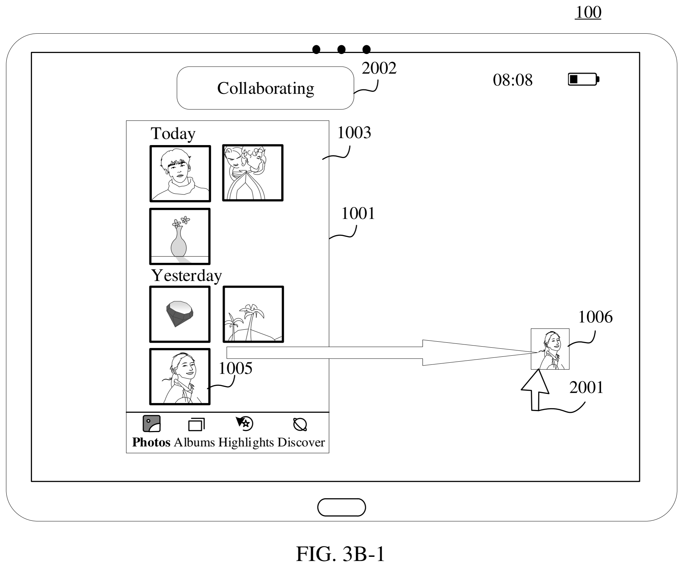

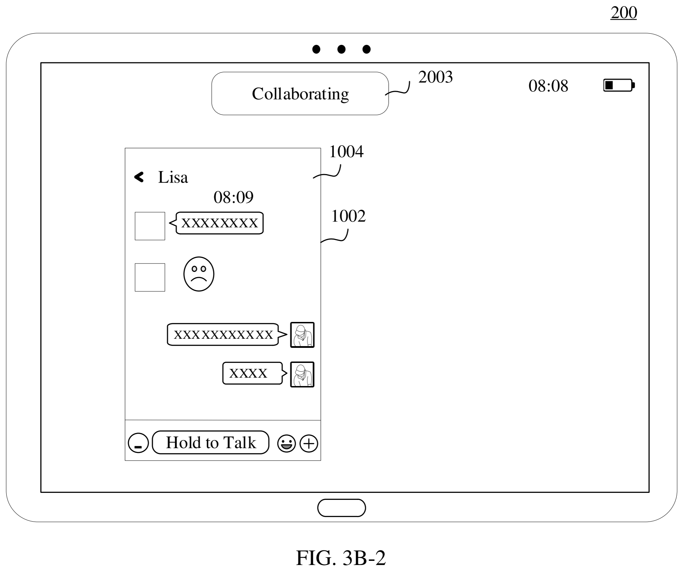

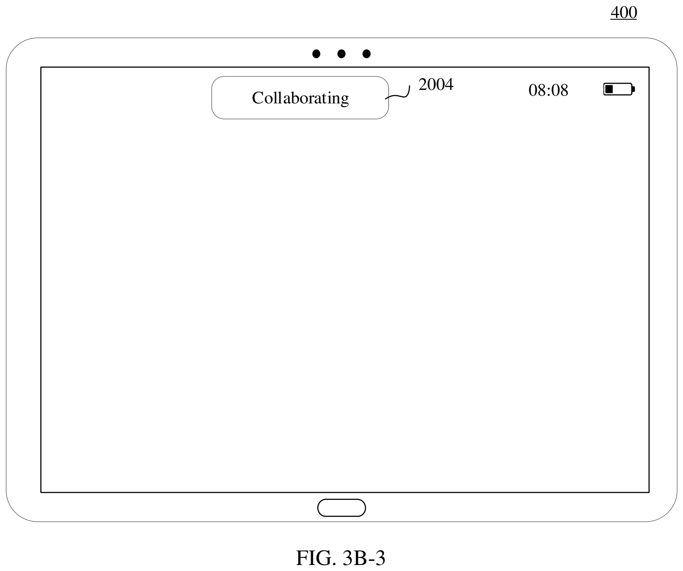

As shown in FIG. 3B-1, in response to the operation of dragging the picture 1005, the electronic device 100 may display an icon 1006, and the icon 1006 may be obtained by taking a screenshot of the picture 1005. A file type of the icon 1006 is a picture.

As shown in FIG. 3B-1, the user may control, by using the mouse 300, the icon 1006 to move toward a right edge of the electronic device 100, and the icon 1006 also moves with movement of a mouse pointer 2001 of the user. The icon 1006 is used to prompt the user with a drag track of the picture 1005.

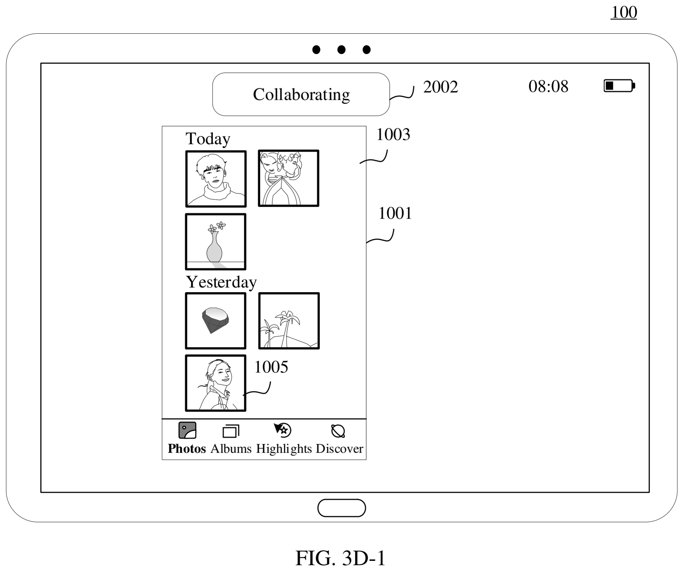

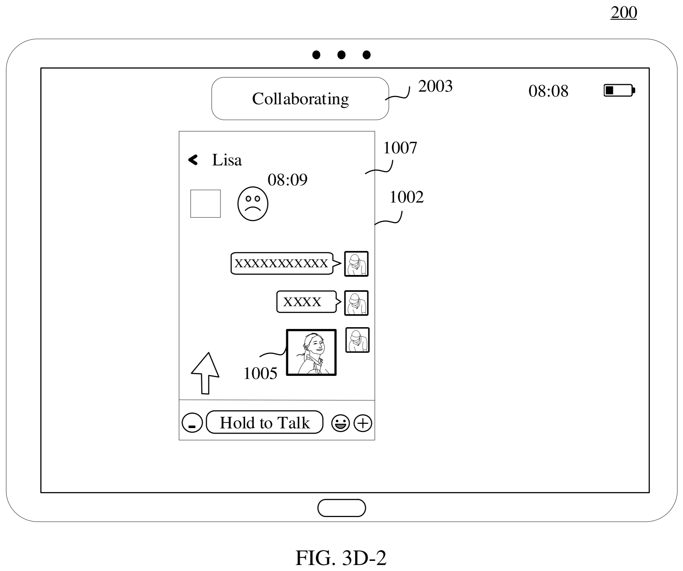

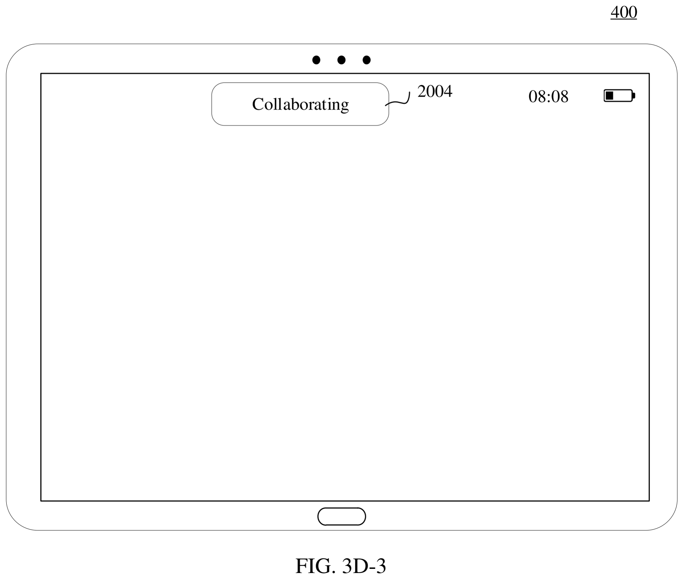

As shown in FIG. 3C-1 and FIG. 3C-2, when the icon 1006 moves across the right edge of the electronic device 100 and a left edge of the electronic device 200 and is displayed on a screen of the electronic device 200, the user may control the electronic device 200 by using the mouse 300. When the user controls, by using the mouse 300, the icon 1006 to continue to move onto the user interface 1004 and places the icon 1006 on the user interface 1004, the user releases the mouse. If the instant messaging application determines that the picture 1005 can be received, the electronic device 200 may send the picture 1005 to the contact "Lisa" by using the instant messaging application. The electronic device 200 may display an interface 1007 shown in FIG. 3D-2. The interface 1007 is similar to the interface 1004, and a difference lies in that the interface 1007 includes the picture 1005, to inform the user that the picture 1005 in the gallery application on the electronic device 100 has been shared with the contact "Lisa" in the instant messaging application on the electronic device 200 through dragging.

In some embodiments, the electronic device 200 may also display icons shown in FIG. 1E to FIG. 1F. Details are not described herein in this application.

It should be noted that FIG. 3A-1 to FIG. 3D-3 show only an example of a manner of sharing data between two devices through dragging. In another embodiment, the electronic device 100 may further share data between the two devices in another manner. This is not limited in this application. In another embodiment, the user may also control, by using a touchpad, a touchscreen, or the like, the mouse 300 to drag the picture 1005 for sharing between the two devices. In another embodiment, the electronic device is not limited to being controlled by using the mouse 300. The electronic device may alternatively not be connected to the mouse, and the user may drag the picture 1005 for sharing between the two devices by directly performing a touch operation on the touchscreen or in other manners.

**The following describes in detail a specific implementation of sharing data by performing a single-device drag operation and a specific implementation of sharing data by performing a multi-device drag operation.**

**First, a specific implementation of sharing first data by performing a single-device drag operation is described.**

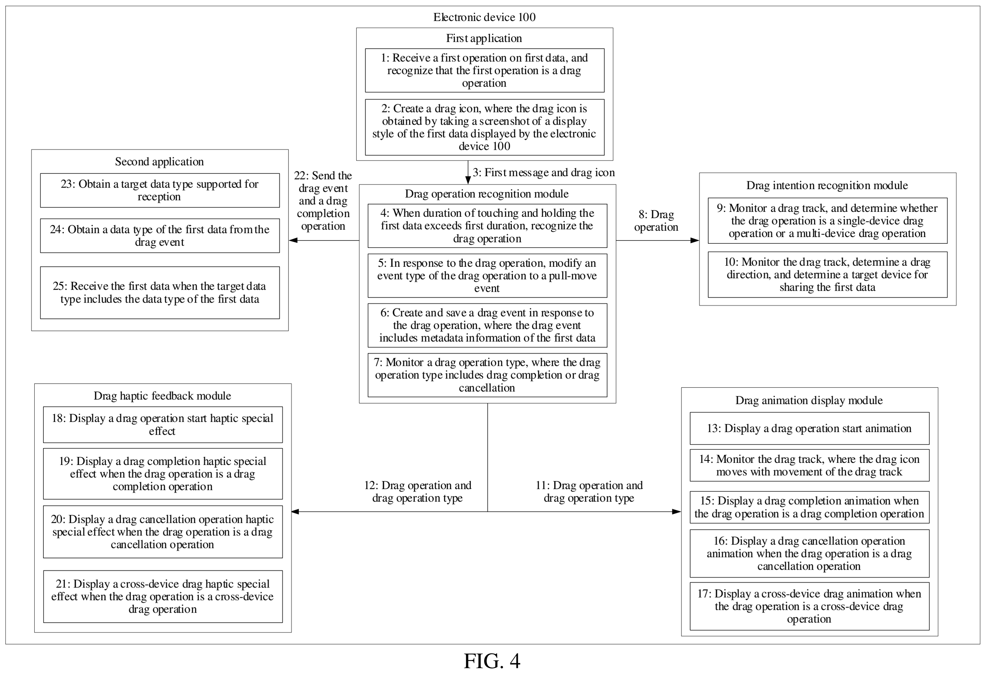

**FIG. 4** **is an interaction diagram of functional modules for sharing first data between two applications on an electronic device 100.**

As shown in FIG. 4, the functional modules include but are not limited to a drag operation recognition module, a drag intention recognition module, a drag animation display module, a drag haptic feedback module, and the like.

The two applications may be a first application and a second application on the electronic device 100. A user may share the first data in the first application with the second application by performing a drag operation.

Specifically, the first application is configured to receive a first operation on the first data, and recognize that the first operation is a drag operation.

The first application is further configured to create a drag icon in response to the first operation, where the drag icon is obtained by taking a screenshot of a display style of the first data displayed by the electronic device 100, and a file type of the drag icon is a picture. In this way, the drag icon can be used across applications and across devices.

After recognizing the drag operation, the first application is further configured to send a first message and the drag icon to the drag operation recognition module, where the first message indicates to the drag operation recognition module that the first operation is the drag operation.

After recognizing the drag operation, the drag operation recognition module is further configured to execute one or more items corresponding to the drag operation. The one or more items corresponding to the drag operation may include the following:

The drag operation recognition module is further configured to modify an event type of the drag operation to a pull-move event after recognizing the drag operation. In this way, when receiving the drag operation of the user, the electronic device 100 can further respond to a non-drag operation of the user, for example, an operation such as a swipe operation, a click operation, a double-click operation, or a triple-click operation, thereby improving operation experience of the user. A reason is as follows: When the electronic device 100 receives the drag operation of the user, the electronic device 100 also receives the non-drag operation of the user, and the drag operation recognition module may modify an event type of the non-drag operation to a move event. The pull-move event is different from the move event. The first application responds to the move event, and a drag framework responds to the pull-move event. In other words, different entities respond to the move event and the pull-move event. Therefore, the electronic device 100 can simultaneously respond to the pull-move event and the move event of different event types.

The drag operation recognition module is further configured to create and save a drag event in response to the drag operation, where the drag event includes metadata information of the first data. The metadata information of the first data includes but is not limited to any one or more of the following: a data type of the first data, a creation time of the first data, a file size of the first data, an identifier of the application to which the first data belongs, a storage location of the first data, and the like.

The drag operation recognition module is further configured to monitor a drag operation type, where the drag operation type includes any one of drag end, drag completion, and drag cancellation.

After recognizing the drag operation, the drag operation recognition module is further configured to report the drag operation to the drag intention recognition module.

The drag intention recognition module is further configured to monitor a drag track, and determine whether the drag operation is a single-device drag operation or a cross-device drag operation.

The drag intention recognition module is further configured to monitor the drag track, determine a drag direction, and determine a target device for sharing the first data.

The drag operation recognition module is further configured to send the drag operation and the drag operation type to the drag animation display module and the drag haptic feedback module.

The drag animation display module is configured to display a drag operation start animation based on the drag operation after the drag operation and the drag operation type sent by the drag operation recognition module are obtained.

The drag animation display module is further configured to monitor the drag track, where the drag icon moves with movement of the drag track.

The drag animation display module is further configured to display a drag completion animation when the drag operation type is a drag completion operation.

The drag animation display module is further configured to display a drag cancellation operation animation when the drag operation is a drag cancellation operation.

The drag animation display module is further configured to display a cross-device drag animation when the drag operation is a cross-device drag operation.

The drag haptic feedback module is configured to display a drag operation start haptic special effect based on the drag operation after the drag operation and the drag operation type sent by the drag operation recognition module are obtained.

The drag haptic feedback module is further configured to display a drag completion haptic special effect when the drag operation is a drag completion operation.

The drag haptic feedback module is further configured to display a drag cancellation operation haptic special effect when the drag operation is a drag cancellation operation.

The drag haptic feedback module is further configured to display a cross-device drag haptic special effect when the drag operation is a cross-device drag operation.

The drag operation recognition module is further configured to send the drag event and the drag completion operation to the second application.

In some embodiments, the drag event and the drag completion operation may be separately sent to the second application, or may be carried together and sent to the second application. This is not limited in this application.

Optionally, when the drag icon is located in a display area of the second application, the drag operation recognition module may send the drag event to the second application. Optionally, when the drag operation recognition module recognizes that the drag operation is the drag completion operation, the drag operation recognition module sends the drag event to the second application. This is not limited in this application.

Optionally, when the drag operation recognition module recognizes that the drag operation is the drag completion operation, the drag operation recognition module sends the drag event to the second application.

After the drag event sent by the drag operation recognition module is obtained, the second application is configured to obtain a target data type supported for reception by the second application.

The second application is further configured to obtain the data type of the first data from the drag event.

The second application is further configured to receive the first data when the target data type includes the data type of the first data. Optionally, in response to receiving the first data, the second application may display the first data in the second application.

Based on this, the first data in the first application is shared with the second application based on the drag operation by using the drag framework.

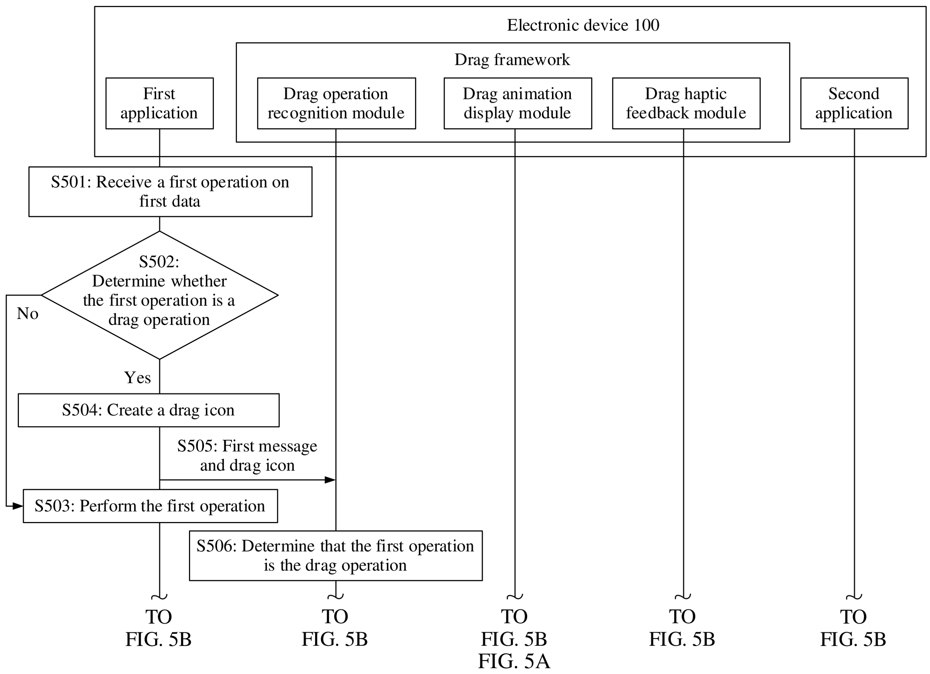

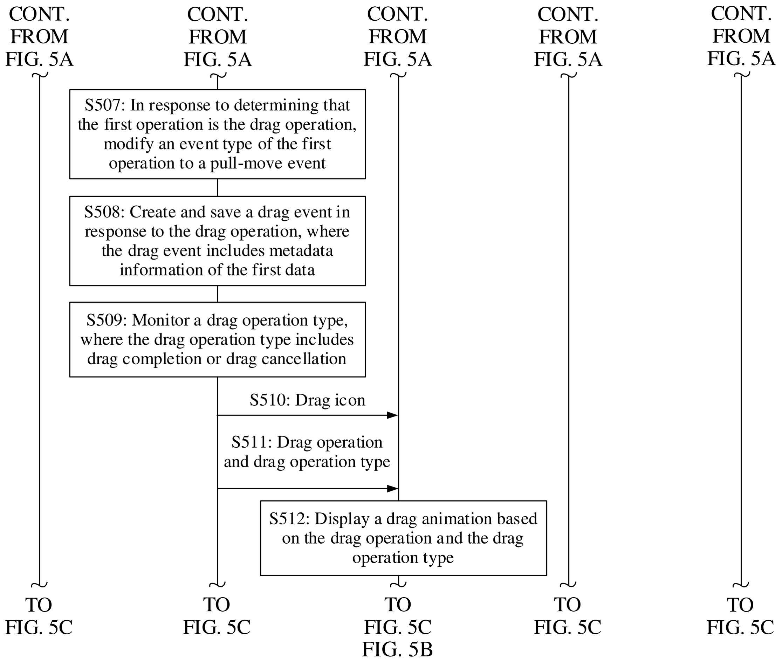

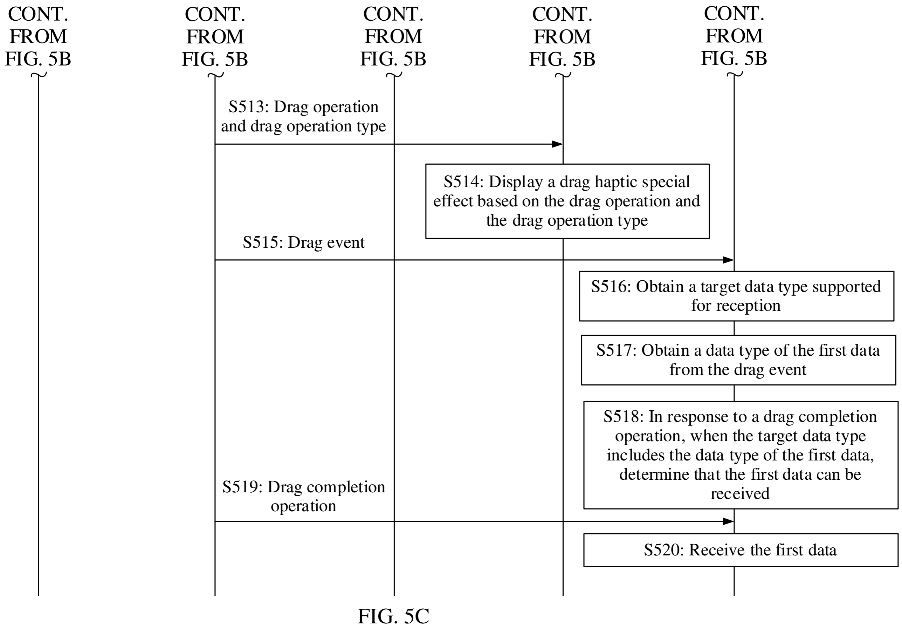

FIG. 5A to FIG. 5C are a schematic flowchart of a method for sharing first data between two applications on an electronic device 100 according to this application.

As shown in FIG. 5A, the electronic device 100 includes a first application, a second application, and a drag framework. The drag framework includes a drag operation recognition module, a drag animation display module, and a drag haptic feedback module.

The first application may be the same as or different from the second application.

S501: The first application receives a first operation on first data.

For example, the first data may be a picture 1005 shown in FIG. 1A.

S502: The first application needs to determine whether the first operation is a drag operation.

The first application may recognize an operation type of the first operation. For example, the first application may recognize a drag operation and a non-drag operation. The non-drag operation may include but is not limited to a click operation, a double-click operation, a triple-click operation, a multi-click (more than three clicks) operation, a swipe operation, and the like.

When it is determined that the first operation is a drag operation, S504 to S520 are performed.

When it is determined that the first operation is a non-drag operation, S503 is performed.

S503: The first application performs the first operation.

When determining that the first operation is a non-drag operation, the first application directly performs the first operation.

S504: The first application creates a drag icon.

In some embodiments, the drag icon may also be referred to as a first picture.

S505: The first application sends the drag icon and a first message to the drag operation recognition module.

In other words, the drag operation recognition module may intercept the drag operation, and hand over a plurality of items of the drag operation to the drag framework for processing, without requiring the application to process the items, so that workload of application development can be reduced.

Optionally, after the drag operation recognition module intercepts the first operation, the drag operation recognition module may also send a message 2 to the first application, where the message 2 indicates that the drag framework has intercepted the first operation, and that the first application does not need to respond to the first operation.

The drag icon is captured by the first application through screenshotting of a display style of the first data displayed by the electronic device 100, and a file type of the drag icon is a picture. In this way, the drag icon can be used across applications and across devices.

S506: In response to the first message, the drag operation recognition module determines that the first operation is the drag operation.

S507: In response to determining that the first operation is the drag operation, the drag operation recognition module modifies an event type of the first operation to a pull-move event.

In some embodiments, the pull-move event may also be referred to as a first event.

In response to determining that the first operation is the drag operation, the drag operation recognition module modifies the event type of the first operation to the pull-move event. In this way, after the drag operation recognition module modifies the event type of the first operation to the pull-move event, when receiving the drag operation of a user, the electronic device 100 can also respond to a non-drag operation of the user, for example, an operation such as a swipe operation, a click operation, a double-click operation, or a triple-click operation, thereby improving operation experience of the user. A reason is as follows: When the electronic device 100 receives the drag operation of the user, the electronic device 100 also receives the non-drag operation of the user, and the drag operation recognition module may modify an event type of the non-drag operation to a move event. The pull-move event is different from the move event. The first application responds to the move event, and a drag framework responds to the pull-move event. In other words, different entities respond to the move event and the pull-move event. Therefore, the electronic device 100 can simultaneously respond to the pull-move event and the move event of different event types.

S508: The drag operation recognition module creates and saves a drag event in response to the drag operation, where the drag event includes metadata information of the first data.

In some embodiments, the metadata information of the first data may also be referred to as first metadata information.

The metadata information of the first data includes but is not limited to any one or more of the following: a data type of the first data, a creation time of the first data, a file size of the first data, an identifier of the application to which the first data belongs, a storage location of the first data, and the like. The metadata information of the first data is used by another application to determine whether to receive the first data.

S509: The drag operation recognition module monitors a drag operation type, where the drag operation type includes drag completion or drag cancellation.

In some embodiments, in a process of dragging the first data, the user may also stop dragging the first data, that is, stop sharing the first data. In other words, the first operation is a drag cancellation operation.

In some embodiments, in a process of dragging the first data, the user may also drag the first data and successfully share the first data with the second application, that is, the first operation is a drag completion operation.

Any one or more of S506 to S509 may be simultaneously performed, or may be performed sequentially. An execution sequence of any step in S506 to S509 is not limited in this application.

S510: The drag operation recognition module sends the drag icon to the drag animation display module.

S511: The drag operation recognition module sends the drag operation and the drag operation type to the drag animation display module.

Optionally, the drag icon may also be sent together with the drag operation and the drag operation type to the drag animation display module.

S512: The drag animation display module displays a drag animation based on the drag operation and the drag operation type.

After the drag operation recognition module recognizes that the first operation is the drag operation, the drag operation recognition module may send the drag operation to the drag animation display module, and the drag animation display module may display a drag operation start animation based on the drag operation.

The drag operation recognition module may continuously monitor the drag operation, and determine the drag operation type.

The drag animation display module may display a drag cancellation operation animation when the drag operation type is a drag cancellation operation.

The drag animation display module may display a drag completion animation when the drag operation type is a drag completion operation.

S513: The drag operation recognition module sends the drag operation and the drag operation type to the drag haptic feedback module.

S514: The drag haptic feedback module displays a drag haptic special effect based on the drag operation and the drag operation type.

After the drag operation recognition module recognizes that the first operation is the drag operation, the drag operation recognition module may send the drag operation to the drag haptic feedback module, and the drag haptic feedback module may display a drag operation start haptic special effect based on the drag operation.

The drag operation recognition module may continuously monitor the drag operation, and determine the drag operation type.

The drag haptic feedback module may display a drag cancellation operation haptic special effect when the drag operation type is a drag cancellation operation. The drag haptic feedback module may display a drag completion haptic special effect when the drag operation type is a drag completion operation.

Alternatively, S513 and S514 may be performed before S511 and S512, or S513 and S514 may be simultaneously performed with S511 and S512. This is not limited in this application.

S515: The drag operation recognition module sends the drag event to the second application.

In some embodiments, the drag event may be sent to the second application before the drag completion operation. In a process in which the user drags the icon to move the drag icon, when the drag icon is located above the second application, for example, when the drag icon is located in a display area of the second application, the drag operation recognition module may send the drag event to the second application, so that the second application can determine, based on the metadata information of the first data in the drag event, whether the first data can be received. Because the electronic device 100 cannot know with which application the user shares the first data, in the process in which the user drags the icon, the drag operation recognition module may send the drag event to the second application provided that the drag icon is located in a display area of another application. The second application may predetermine whether the first data can be received. In this way, when the user stops dragging the icon, and the dragging is completed, the second application may determine, based on predetermining whether the first data can be received, whether to receive the first data or refuse to receive the first data.

Optionally, when the drag icon is located in the display area of the second application, and it is determined that the second application can receive the first data, the second application may send a third message to the drag operation recognition module, and the drag operation recognition module may display a first mark on the drag icon, where the first mark may be an identifier 1008 shown in FIG. 1E, to indicate that the second application can receive the first data.

In some embodiments, the first mark may also be referred to as a first icon.

Optionally, when the drag icon is located in the display area of the second application, and it is determined that the second application cannot receive the first data, the second application may send a fourth message to the drag operation recognition module, and the drag operation recognition module may display a second mark on the drag image, where the second mark may be an identifier 1009 shown in FIG. 1F, to indicate that the second application cannot receive the first data.

In some embodiments, the second mark may also be referred to as a second icon.

In another embodiment, the drag event may be sent to the second application after the drag completion operation. After the drag operation recognition module detects the drag completion operation, the drag operation recognition module sends the drag event to the second application. Then the second application determines whether the first data can be received, that is, determines whether to receive the first data or refuse to receive the first data.

An occasion at which the drag operation recognition module sends the drag event is not limited in this application.

S516: The second application obtains a target data type supported for reception.

In some embodiments, the target data type may also be referred to as a second data type.

S517: The second application obtains the data type of the first data from the drag event.

S518: In response to the drag completion operation, when the target data type includes the data type of the first data, determine that the first data can be received.

The target data type includes but is not limited to one or more of the following: a text, a picture, a hyperlink, a video, a file, an icon, a card, a folder, and the like.

After obtaining the drag event sent by the drag operation recognition module, the second application obtains the target data type supported for reception by the second application. Target data types supported by different applications may be the same or may be different.

The drag event includes the metadata information of the first data, and the metadata information of the first data includes the data type of the first data. When the target data type includes the data type of the first data, the second application determines that the first data can be received.

S519: The drag operation recognition module sends the drag completion operation to the second application.

S520: The second application receives the first data.

The user releases the drag icon in the display area of the second application, that is, the user determines to share the first data with the second application. The drag operation recognition module may determine that the first operation is the drag completion operation, and the drag operation recognition module sends the drag completion operation to the second application.

In response to the drag completion operation, the second application receives the first data based on determining that the first data can be received.

In some embodiments, in response to receiving the first data, the second application may display the first data in the second application.

Optionally, S515 and S519 may alternatively be performed simultaneously.

Optionally, S516 to S518 may alternatively be performed after S519.

An execution sequence of one or more steps in the embodiment in FIG. 5A to FIG. 5C is not limited in this application either.

In some embodiments, when the electronic device 100 responds to the first operation that is the drag operation, the electronic device 100 may also respond to the non-drag operation. In other words, the electronic device 100 may simultaneously respond to two different types of user operations, thereby improving user experience.

Based on the foregoing description, it can be learned that the drag framework responds to the drag operation, and that the application responds to the non-drag operation. In other words, different entities respond to the drag operation and the non-drag operation. Therefore, the electronic device 100 can simultaneously respond to the drag operation and the non-drag operation of different event types.

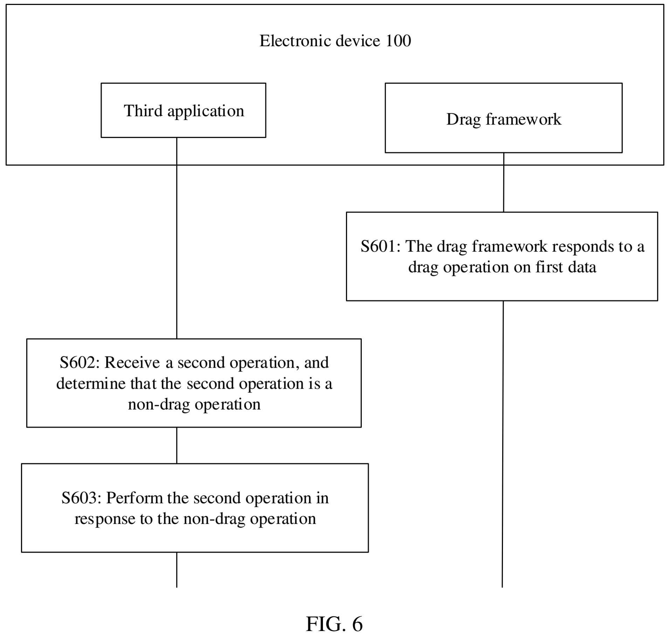

FIG. 6 is a schematic flowchart of a method for simultaneously responding to a drag operation and a non-drag operation by an electronic device 100 according to this application.

As shown in FIG. 6, the electronic device 100 includes a third application and a drag framework, and the drag framework includes a drag operation recognition module.

A first application may be the same as or different from the third application. In some embodiments, the third application in FIG. 6 may alternatively be a second application.

S601: The drag framework responds to a drag operation on first data.

S602: The third application receives a second operation, and determines that the second operation is a non-drag operation.

S603: The third application performs the second operation in response to the non-drag operation.

The second operation may be a user operation on second data. The third application may recognize a type of the second operation. For example, when the second operation is the non-drag operation, the second operation may include but is not limited to any one of a click operation, a double-click operation, a triple-click operation, a multi-click (more than triple-click) operation, and a swipe operation.

When the second operation is the non-drag operation, the third application may directly perform the second operation.

Optionally, during execution of S601 and S602, the drag framework responds to the drag operation on the first data. An event type of the non-drag operation may be a move event, and different entities respond to the move event and a pull-move event. Therefore, the electronic device 100 can simultaneously respond to the pull-move event and the move event of different event types. In other words, the electronic device 100 can simultaneously respond to the drag operation and the non-drag operation, thereby improving user experience.

**The following describes a specific implementation of sharing first data by performing a multi-device drag operation.**

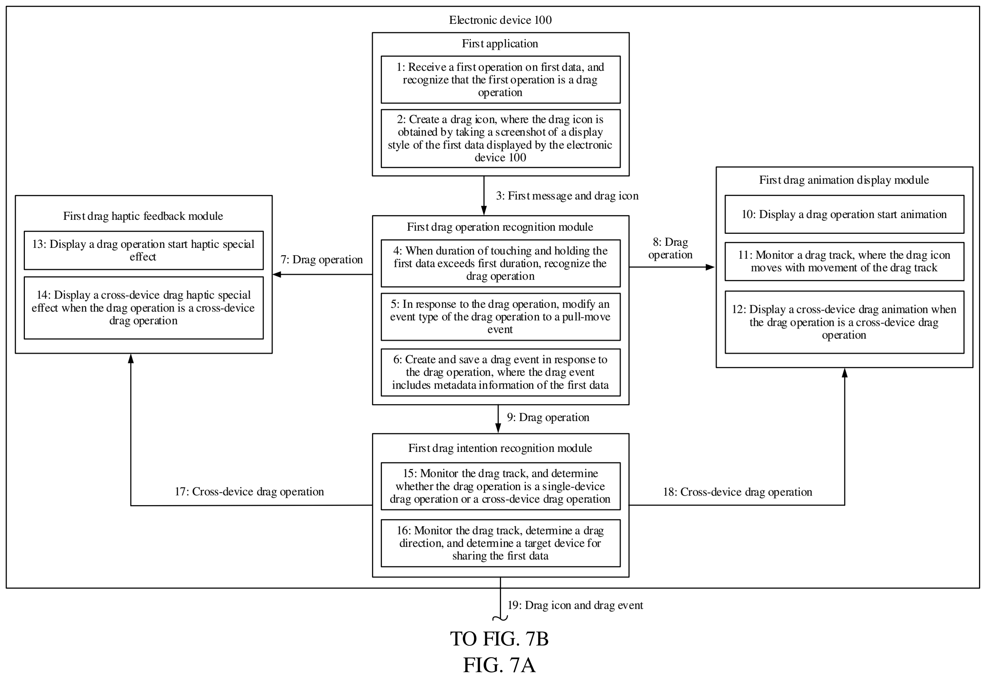

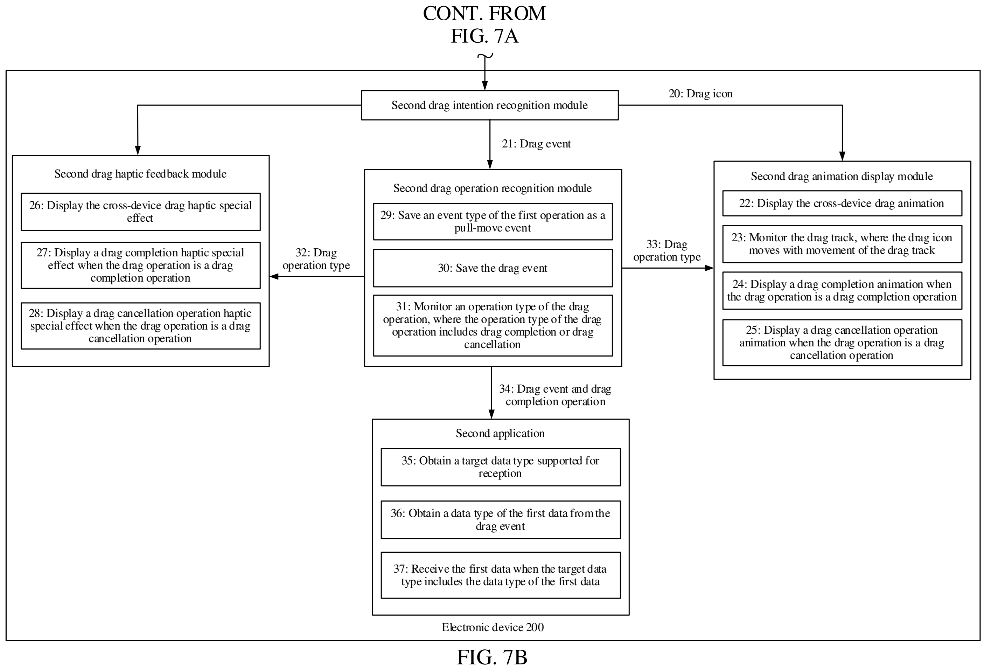

**FIG. 7A** **and** **FIG. 7B** **are an interaction diagram of functional modules for sharing first data between two applications on an electronic device 100 and an electronic device 200.**

As shown in FIG. 7A and FIG. 7B, functional modules on the electronic device 100 include but are not limited to a first application and a drag framework, and the drag framework includes but is not limited to a drag operation recognition module, a drag intention recognition module, a drag animation display module, a drag haptic feedback module, and the like.

Functional modules on the electronic device 200 include but are not limited to a second application and a drag framework, and the drag framework includes but is not limited to a drag operation recognition module, a drag intention recognition module, a drag animation display module, a drag haptic feedback module, and the like.

For ease of description, functional modules on the electronic device 100 are referred to as a first drag operation recognition module, a first drag intention recognition module, a first drag animation display module, a first drag haptic feedback module, and the like.

Functional modules on the electronic device 200 are referred to as a second drag operation recognition module, a second drag intention recognition module, a second drag animation display module, a second drag haptic feedback module, and the like.

The first application on the electronic device 100 may be the same as or different from the second application on the electronic device 200.

**In a process of sharing first data by performing a multi-device drag operation, the drag operation is started on the electronic device 100.**

Specifically, the first application is configured to receive a first operation on the first data, and recognize that the first operation is a drag operation.

The first application is further configured to create a drag icon in response to the first operation, where the drag icon is obtained by taking a screenshot of a display style of the first data displayed by the electronic device 100, and a file type of the drag icon is a picture. In this way, the drag icon can be used across applications and across devices.

After recognizing the drag operation, the first application is further configured to send a first message and the drag icon to the drag operation recognition module, where the first message indicates to the drag operation recognition module that the first operation is the drag operation.

After recognizing the drag operation, the drag operation recognition module is further configured to execute one or more items corresponding to the drag operation. The one or more items corresponding to the drag operation may include the following:

The first drag operation recognition module is further configured to modify an event type of the drag operation to a pull-move event after recognizing the drag operation. In this way, when receiving the drag operation of a user, the electronic device 100 can further respond to a non-drag operation of the user, for example, an operation such as a swipe operation, a click operation, a double-click operation, or a triple-click operation, thereby improving operation experience of the user. A reason is as follows: When the electronic device 100 receives the drag operation of the user, the electronic device 100 also receives the non-drag operation of the user, and the drag operation recognition module may modify an event type of the non-drag operation to a move event. The pull-move event is different from the move event. The first application responds to the move event, and a drag framework responds to the pull-move event. In other words, different entities respond to the move event and the pull-move event. Therefore, the electronic device 100 can simultaneously respond to the pull-move event and the move event of different event types.

The first drag operation recognition module is further configured to create and save a drag event in response to the drag operation, where the drag event includes metadata information of the first data. The metadata information of the first data includes but is not limited to any one or more of the following: a data type of the first data, a creation time of the first data, a file size of the first data, an identifier of the application to which the first data belongs, a storage location of the first data, and the like.

After recognizing that the first operation is the drag operation, the first drag operation recognition module is further configured to separately send the drag operation to the first drag animation display module, the first drag haptic feedback module, and the first drag intention recognition module.

The first drag animation display module is configured to display a drag operation start animation based on the drag operation after the drag operation and a drag operation type sent by the drag operation recognition module are obtained.

The first drag animation display module is further configured to monitor a drag track, where the drag icon moves with movement of the drag track.

The first drag animation display module is further configured to display a cross-device drag animation when the drag operation is a cross-device drag operation.

The first drag haptic feedback module is configured to display a drag operation start haptic special effect based on the drag operation after the drag operation and the drag operation type sent by the drag operation recognition module are obtained.

The first drag haptic feedback module is further configured to display a cross-device drag haptic special effect when the drag operation is a cross-device drag operation.

The first drag intention recognition module is further configured to monitor the drag track, and determine whether the drag operation is a single-device drag operation or a cross-device drag operation, and after determining the cross-device drag operation, separately send the cross-device drag operation to the first drag animation display module and the first drag haptic feedback module, so that the first drag animation display module can display the cross-device drag animation when the drag operation is the cross-device drag operation, and that the first drag haptic feedback module can display the cross-device drag haptic special effect when the drag operation is the cross-device drag operation.

The first drag intention recognition module is further configured to monitor the drag track, determine a drag direction, and determine a target device for sharing the first data. For example, the first drag intention recognition module determines that the target device for sharing the first data is the electronic device 200.

When the cross-device drag operation is determined and a first condition is met, the first drag intention recognition module sends the drag icon and the drag event to the second drag intention recognition module on the electronic device 200. The drag icon and the drag event may be sent by the first drag operation recognition module to the first drag intention recognition module.

After the second drag intention recognition module obtains the drag icon and the drag event sent by the first drag intention recognition module, the second drag intention recognition module sends the drag icon to the drag animation display module, and the second drag intention recognition module sends the drag event to the drag operation recognition module.

The second drag animation display module is configured to display a cross-device drag animation after the drag icon sent by the second drag intention recognition module is obtained. The cross-device drag animation displayed on the electronic device 200 may be the same as or different from the cross-device drag animation displayed on the electronic device 100.

The second drag animation display module is further configured to monitor the drag track, to control the drag icon to move with the drag track.

The second drag animation display module is further configured to display a drag completion animation when the drag operation is a drag completion operation.

The second drag animation display module is further configured to display a drag cancellation operation animation when the drag operation is a drag cancellation operation.

The second drag haptic feedback module is configured to display a cross-device drag haptic special effect. The cross-device drag haptic special effect displayed on the electronic device 200 may be the same as or different from the cross-device drag haptic special effect displayed on the electronic device 100.

The second drag haptic feedback module is further configured to display a drag completion haptic special effect when the drag operation is a drag completion operation.

The second drag haptic feedback module is further configured to display a drag cancellation operation haptic special effect when the drag operation is a drag cancellation operation.

The second drag operation recognition module is configured to save an event type of the first operation as a pull-move event after receiving the drag event sent by the second drag intention recognition module.

The second drag operation recognition module is further configured to save the drag event after receiving the drag event sent by the second drag intention recognition module.

The second drag operation recognition module is further configured to monitor an operation type of the drag operation, where the operation type of the drag operation includes drag completion or drag cancellation.

The second drag operation recognition module is further configured to separately send the drag operation type to the second drag haptic feedback module and the second drag animation display module, so that the second drag haptic feedback module can display different haptic feedback special effects based on different drag operation types, and that the second drag animation display module may display different animations based on different drag operation types.

The second drag operation recognition module is further configured to send the drag event and the drag completion operation to the second application.

In some embodiments, the drag event and the drag completion operation may be separately sent to the second application, or may be carried together and sent to the second application. This is not limited in this application.

Optionally, when the drag icon is located in a display area of the second application, the second drag operation recognition module may send the drag event to the second application. Optionally, when the second drag operation recognition module recognizes that the drag operation is the drag completion operation, the drag operation recognition module sends the drag event to the second application. This is not limited in this application.

Optionally, when the second drag operation recognition module recognizes that the drag operation is the drag completion operation, the second drag operation recognition module sends the drag event to the second application.

After the drag event sent by the second drag operation recognition module is obtained, the second application is configured to obtain a target data type supported for reception by the second application.

The second application is further configured to obtain the data type of the first data from the drag event.

The second application is further configured to receive the first data when the target data type includes the data type of the first data. Optionally, in response to receiving the first data, the second application may display the first data in the second application.

Based on this, data sharing can be implemented between two applications on different devices based on the drag operation by using the drag framework.

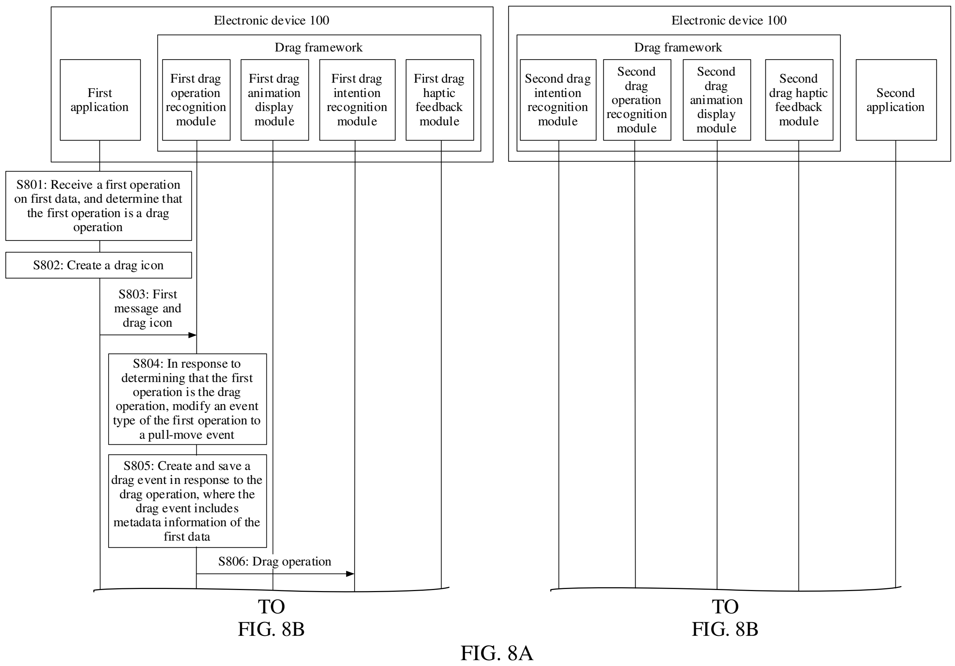

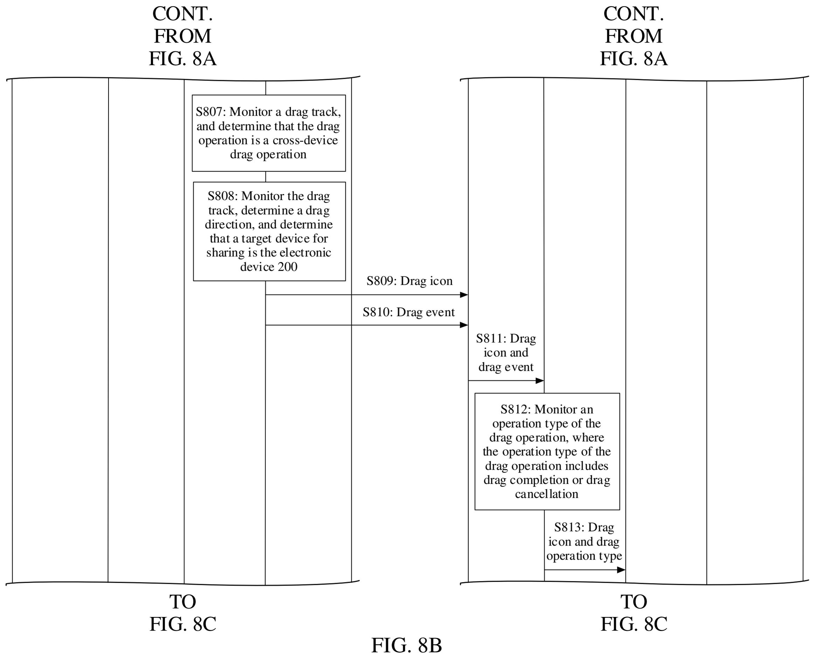

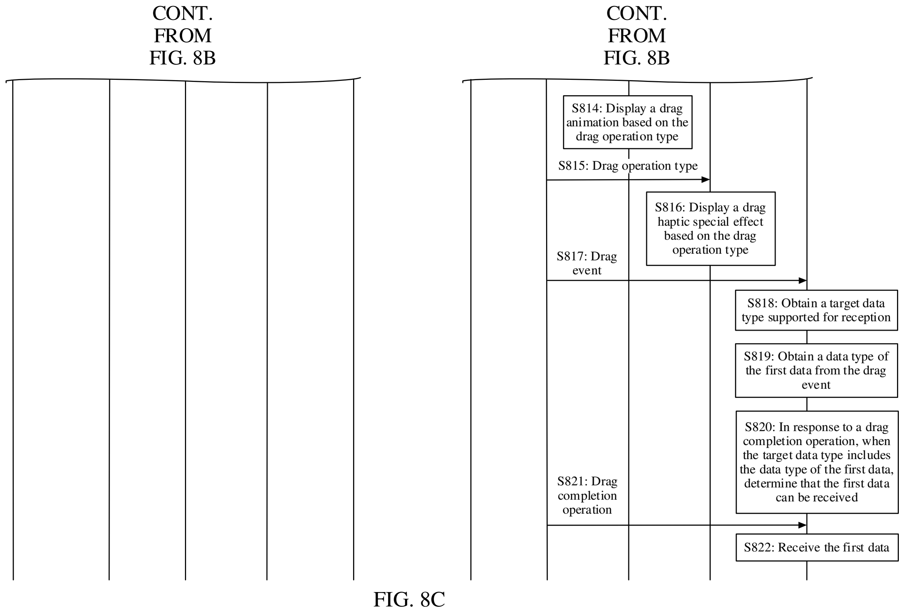

**FIG. 8A to FIG. 8C** **are a schematic flowchart of a method for sharing first data between two applications on an electronic device 100 and an electronic device 200 according to this application.**

As shown in FIG. 8A, the electronic device 100 includes a first application, a first drag operation recognition module, a first drag animation display module, a first drag intention recognition module, and a first drag haptic feedback module.

The electronic device 200 includes a second application, a second drag intention recognition module, a second drag operation recognition module, a second drag animation display module, and a second drag haptic feedback module.

The first application may be the same as or different from the second application. That the first application is the same as the second application may mean that the first application and the second application are the same application or similar applications.

S801: The first application receives a first operation on first data, and determines that the first operation is a drag operation.

For example, the first data may be a picture 1005 shown in FIG. 3A-1.

The first operation may be a user operation of touching and holding the first data shown in FIG. 3A-1.

S802: The first application creates a drag icon.

S803: The first application sends the drag icon and a first message to the drag operation recognition module.

In other words, the drag operation recognition module may intercept the drag operation, and hand over a plurality of items of the drag operation to the drag framework for processing, without requiring the application to process the items, so that workload of application development can be reduced.

Optionally, after the drag operation recognition module intercepts the first operation, the drag operation recognition module may also send a message 2 to the first application, where the message 2 indicates that the drag framework has intercepted the first operation, and that the first application does not need to respond to the first operation.

The drag icon is captured by the first application through screenshotting of a display style of the first data displayed by the electronic device 100, and a file type of the drag icon is a picture. In this way, the drag icon can be used across applications and across devices.

In some embodiments, the first drag operation recognition module may further separately send the drag operation to the first drag animation display module and the first drag haptic feedback module.

In response to the drag operation, the first drag animation display module may display a drag operation start animation, monitor a drag track, and control the drag icon to move with the drag track.

In response to the drag operation, the first drag haptic feedback module may display a drag operation start haptic special effect.

S804: In response to determining that the first operation is the drag operation, the first drag operation recognition module modifies an event type of the first operation to a pull-move event.

In response to determining that the first operation is the drag operation, the first drag operation recognition module modifies the event type of the first operation to the pull-move event. In this way, after the first drag operation recognition module modifies the event type of the first operation to the pull-move event, when receiving the drag operation of a user, the electronic device 100 can also respond to a non-drag operation of the user, for example, an operation such as a swipe operation, a click operation, a double-click operation, or a triple-click operation, thereby improving operation experience of the user. A reason is as follows: When the electronic device 100 receives the drag operation of the user, the electronic device 100 also receives the non-drag operation of the user, and the first drag operation recognition module may modify an event type of the non-drag operation to a move event. The pull-move event is different from the move event. The first application responds to the move event, and the drag framework responds to the pull-move event. In other words, different entities respond to the move event and the pull-move event. Therefore, the electronic device 100 can simultaneously respond to the pull-move event and the move event of different event types.

S805: The first drag operation recognition module creates and saves a drag event in response to the drag operation, where the drag event includes metadata information of the first data.

The metadata information of the first data includes but is not limited to any one or more of the following: a data type of the first data, a creation time of the first data, a file size of the first data, an identifier of the application to which the first data belongs, a storage location of the first data, and the like. The metadata information of the first data is used by another application to determine whether to receive the first data.

S806: The first drag operation recognition module sends the drag operation to the first drag intention recognition module.

Optionally, S806 may alternatively be performed after S803.

S807: The first drag intention recognition module monitors the drag track, and determines that the drag operation is a cross-device drag operation.

In some embodiments, a first condition may be that at least a first area display area in a complete display area of the drag icon exceeds an edge of a display of the electronic device 100. For example, the first area display area may be half of the complete display area.

The first condition may alternatively be another condition. This is not limited in this application either.

S808: The first drag intention recognition module monitors the drag track, determines a drag direction, and determines that a target device for sharing is the electronic device 200.

For example, as shown in FIG. 2D, when the drag track moves toward a right edge of the electronic device 100, the first drag intention recognition module may determine that the target device for sharing is the electronic device 200. When the drag track moves toward a left edge of the electronic device 100, the first drag intention recognition module may determine that the target device for sharing is the electronic device 200.

In another embodiment, when the electronic device 200 establishes a collaborative connection to only one device, and the drag track moves toward a right edge, a left edge, an upper edge, or a lower edge of the electronic device 100, it may be determined that the target device for sharing is the electronic device 200.

The electronic device 100 may alternatively determine the target device for sharing in another manner. This is not limited in this application either.

In some embodiments, after the first drag intention recognition module determines the cross-device drag operation, the first drag intention recognition module may separately send the cross-device drag operation to the first drag animation display module and the first drag haptic feedback module.

The first drag animation display module is further configured to display a cross-device drag animation in response to the cross-device drag operation.

The first drag haptic feedback module is further configured to display a cross-device drag haptic special effect in response to the cross-device drag operation.

S809: The first drag intention recognition module sends the drag icon to the second drag intention recognition module.

S810: The first drag intention recognition module sends the drag event to the second drag intention recognition module.

Optionally, the first drag intention recognition module may send the drag icon and the drag event to the second drag intention recognition module by using a collaborative connection.

S811: The second drag intention recognition module sends the drag icon and the drag event to the second drag operation recognition module.

After the second drag intention recognition module receives the drag icon and the drag event sent by the first drag intention recognition module, the second drag intention recognition module sends the drag icon and the drag event to the second drag operation recognition module.

Optionally, after the second drag operation recognition module receives the drag icon and the drag event sent by the second drag intention recognition module, the second drag operation recognition module is further configured to save the event type of the first operation as the pull-move event and save the drag event. In this way, after the second drag operation recognition module modifies the event type of the first operation to the pull-move event, when receiving the drag operation of the user, the electronic device 200 can also respond to a non-drag operation of the user, for example, an operation such as a swipe operation, a click operation, a double-click operation, or a triple-click operation, thereby improving operation experience of the user. A reason is as follows: When the electronic device 200 receives the drag operation of the user, the electronic device 200 also receives the non-drag operation of the user, and the second drag operation recognition module may modify an event type of the non-drag operation to a move event. The pull-move event is different from the move event. The first application responds to the move event, and the drag framework responds to the pull-move event. In other words, different entities respond to the move event and the pull-move event. Therefore, the electronic device 100 can simultaneously respond to the pull-move event and the move event of different event types.

S812: The second drag operation recognition module monitors an operation type of the drag operation, where the operation type of the drag operation includes drag completion or drag cancellation.

After the second drag operation recognition module obtains the drag icon and the drag event sent by the second drag intention recognition module, the second drag operation recognition module may determine the drag operation, and the second drag operation recognition module may monitor the operation type of the drag operation, where the operation type of the drag operation includes drag completion or drag cancellation.

S813: The second drag operation recognition module sends the drag icon and the drag operation type to the second drag animation display module.

S814: The second drag animation display module displays a drag animation based on the drag operation type.

The drag operation type includes a drag completion operation or a drag cancellation operation.

The second drag animation display module displays a cross-device drag animation after the drag icon and the drag operation type sent by the second drag intention recognition module are obtained. The cross-device drag animation displayed on the electronic device 200 may be the same as or different from the cross-device drag animation displayed on the electronic device 100.

The second drag animation display module may monitor the drag track, to control the drag icon to move with the drag track.

The second drag animation display module may display a drag completion animation when the drag operation is a drag completion operation.

The second drag animation display module may display a drag cancellation operation animation when the drag operation is a drag cancellation operation.

S815: The second drag operation recognition module sends the drag operation type to the second drag haptic feedback module.

S816: The second drag haptic feedback module displays a drag haptic special effect based on the drag operation type.

The drag operation type includes a drag completion operation or a drag cancellation operation.

The second drag haptic feedback module displays a cross-device drag haptic special effect after the drag operation type sent by the second drag intention recognition module is obtained. The cross-device drag haptic special effect displayed on the electronic device 200 may be the same as or different from the cross-device drag haptic special effect displayed on the electronic device 100.

The second drag haptic feedback module is further configured to display a drag completion haptic special effect when the drag operation is a drag completion operation.

The second drag haptic feedback module is further configured to display a drag cancellation operation haptic special effect when the drag operation is a drag cancellation operation.

S817: The second drag operation recognition module sends the drag event to the second application.

In some embodiments, the drag event may be sent to the second application before the drag completion operation. In a process in which the user drags the icon to move the drag icon, when the drag icon is located above the second application, for example, when the drag icon is located in a display area of the second application, the drag operation recognition module may send the drag event to the second application, so that the second application can determine, based on the metadata information of the first data in the drag event, whether the first data can be received. Because the electronic device 200 cannot know with which application the user shares the first data, in the process in which the user drags the icon, the drag operation recognition module may send the drag event to the second application provided that the drag icon is located in a display area of another application. The second application may predetermine whether the first data can be received. In this way, when the user stops dragging the icon, and the dragging is completed, the second application may determine, based on predetermining whether the first data can be received, whether to receive the first data or refuse to receive the first data.

Optionally, when the drag icon is located in the display area of the second application, and it is determined that the second application can receive the first data, the drag operation recognition module may display a first mark on the drag image, where the first mark may be similar to an identifier 1008 shown in FIG. 1E, to indicate that the second application can receive the first data.

Optionally, when the drag icon is located in the display area of the second application, and it is determined that the second application cannot receive the first data, the drag operation recognition module may display a second mark on the drag image, where the second mark may be similar to an identifier 1009 shown in FIG. 1F, to indicate that the second application cannot receive the first data.

In another embodiment, the drag event may be sent to the second application after the drag completion operation. After the drag operation recognition module detects the drag completion operation, the drag operation recognition module sends the drag event to the second application. Then the second application determines whether the first data can be received, that is, determines whether to receive the first data or refuse to receive the first data.

An occasion at which the drag operation recognition module sends the drag event is not limited in this application.

S818: The second application obtains a target data type supported for reception.

S819: The second application obtains the data type of the first data from the drag event.

S820: In response to the drag completion operation, when the target data type includes the data type of the first data, determine that the first data can be received.

The target data type includes but is not limited to one or more of the following: a text, a picture, a hyperlink, a video, a file, an icon, a card, a folder, and the like.

After obtaining the drag event sent by the second drag operation recognition module, the second application obtains the target data type supported for reception by the second application. Target data types supported by different applications may be the same or may be different.

The drag event includes the metadata information of the first data, and the metadata information of the first data includes the data type of the first data. When the target data type includes the data type of the first data, the second application determines that the first data can be received.

S821: The second drag operation recognition module sends the drag completion operation to the second application.

S822: The second application receives the first data.

The user releases the drag icon in the display area of the second application, that is, the user determines to share the first data with the second application. The second drag operation recognition module may determine that the first operation is the drag completion operation, and the second drag operation recognition module sends the drag completion operation to the second application.

In response to the drag completion operation, the second application receives the first data based on determining that the first data can be received.

In some embodiments, in response to receiving the first data, the second application may display the first data in the second application.

Optionally, S817 and S821 may alternatively be performed simultaneously.

Optionally, S818 to S820 may alternatively be performed after S821.

An execution sequence of one or more steps in the embodiment in FIG. 8A to FIG. 8C is not limited in this application either.

In some embodiments, when the electronic device 200 responds to the drag operation, the electronic device 200 may also respond to the non-drag operation. In other words, the electronic device 200 may simultaneously respond to two different types of user operations. For details, refer to descriptions in the embodiment in FIG. 6. Details are not described herein again in this application.

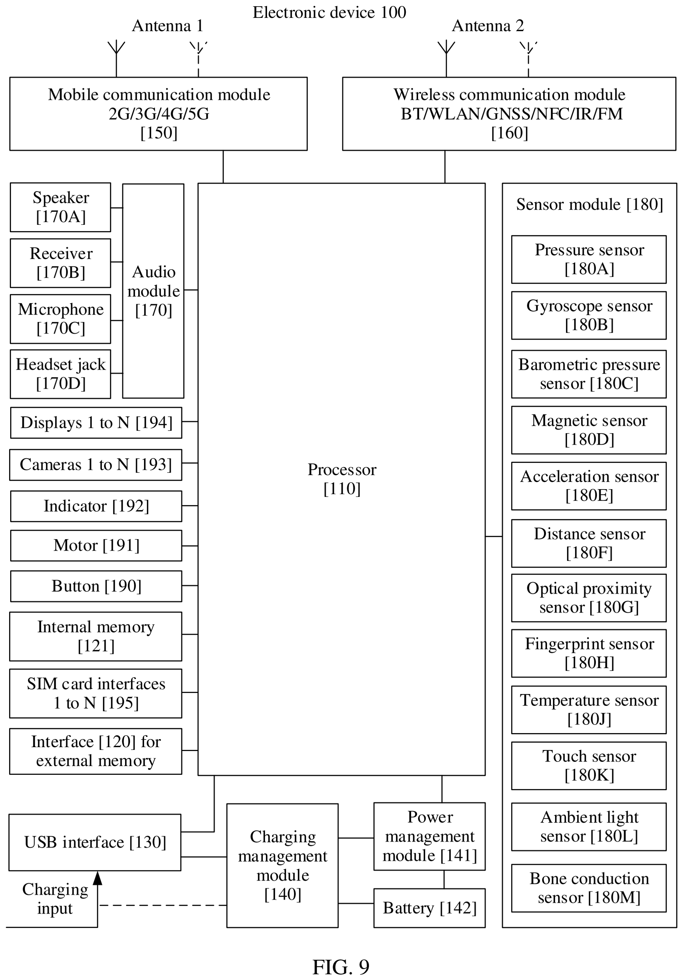

FIG. 9 is a diagram of a hardware structure of an electronic device according to this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not particularly limited in embodiments of this application. In the following embodiments of this application, an example in which the electronic device 100 is a mobile phone is used for description.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data used only a short time ago or used cyclically by the processor 110. If the processor 110 needs to use the instructions or data again, the processor 110 may invoke the instructions or data directly from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface complying with a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect a headset for playing audio through the headset. Alternatively, the interface may be configured to connect to another electronic device, for example, an AR device.

It may be understood that an interface connection relationship between the modules that is illustrated in embodiments of the present invention is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. While charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G or the like and applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal through the antenna 1 into an electromagnetic wave for radiation. In some embodiments, at least some functional modules in the mobile communication module 150 may be disposed in the processor 110. In some embodiments, at least some functional modules in the mobile communication module 150 and at least some modules in the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution including a wireless local area network (wireless local area network, WLAN) (for example, a Wireless Fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal through the antenna 2 into an electromagnetic wave for radiation.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the GPUs execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a still image or a video. An optical image of an object is generated through the lens and projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as a DDR5 SDRAM), or the like. The non-volatile memory may include a magnetic disk storage device or a flash memory (flash memory).

The flash memory may be classified into a NOR flash, a NAND flash, a 3D NAND flash, and the like based on an operating principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (universal flash storage, UFS), an embedded multimedia card (embedded multimedia card, eMMC), and the like based on storage specifications.

The random access memory may be directly read and written by the processor 110. The random access memory may be configured to store an executable program (for example, machine instructions) in an operating system or another running program, and may be further configured to store data of a user, data of an application, and the like.

The non-volatile memory may also store the executable program, the data of the user, the data of the application, and the like, which may be pre-loaded to the random access memory for the processor 110 to directly perform a read or write operation.

The interface 120 for external memory may be configured to connect to an external non-volatile memory, to extend a storage capacity of the electronic device 100. The external non-volatile memory communicates with the processor 110 through the interface 120 for external memory, to implement a data storage function. For example, files such as music and videos are stored in the external non-volatile memory.

The electronic device 100 may implement an audio function, for example, music playback and sound recording, by using the audio module 170, the speaker 170A, the receiver 170B, the microphone 170C, the headset jack 170D, the application processor, or the like.

The audio module 170 is configured to convert digital audio information into an analog audio signal and output the analog audio signal, and is also configured to convert an analog audio input into a digital audio signal. The audio module 170 may be further configured to encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received by using the electronic device 100, the receiver 170B may be put close to a human ear to listen to a speech.

The microphone 170C, also referred to as a "mike" or a "mic", is configured to convert a sound signal into an electrical signal. When making a call or sending a voice message, the user may position the mouth close to the microphone 170C and speak, to input a sound signal to the microphone 170C. At least one microphone 170C may be disposed in the electronic device 100. In some other embodiments, two microphones 170C may be disposed in the electronic device 100, to collect sound signals and further implement a noise reduction function. In some other embodiments, three, four, or more microphones 170C may alternatively be disposed in the electronic device 100, to collect sound signals, reduce noise, further identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal and can convert the pressure signal into an electrical signal.

The gyroscope sensor 180B may be configured to determine a motion posture of the electronic device 100. The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor.

The acceleration sensor 180E may detect accelerations of the electronic device 100 in various directions (generally three axes). When the electronic device 100 is stationary, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance by using infrared or laser. In some embodiments, in the shooting scene, the electronic device 100 may measure the distance by using the distance sensor 180F, to implement fast focusing.

The optical proximity sensor 180G may include, for example, a light-emitting diode (LED) and an optical detector, for example, a photoelectric detector.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also known as a "touch device".

The bone conduction sensor 180M may obtain a vibration signal.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also have different vibration feedback effects corresponding to touch operations performed on different areas of the display 194. Different application scenarios (for example, a time reminder, information receiving, an alarm clock, and a game) may also correspond to different vibration feedback effects. Customization of a touch vibration feedback effect may also be supported.

The indicator 192 may be an indicator light, and may be configured to indicate a charging status and a power change, or may be configured to indicate a message, a missed call, a notification, and the like.

The SIM card interface 195 is configured to connect to a SIM card.

It may be understood that the structure illustrated in the embodiments of the present invention does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

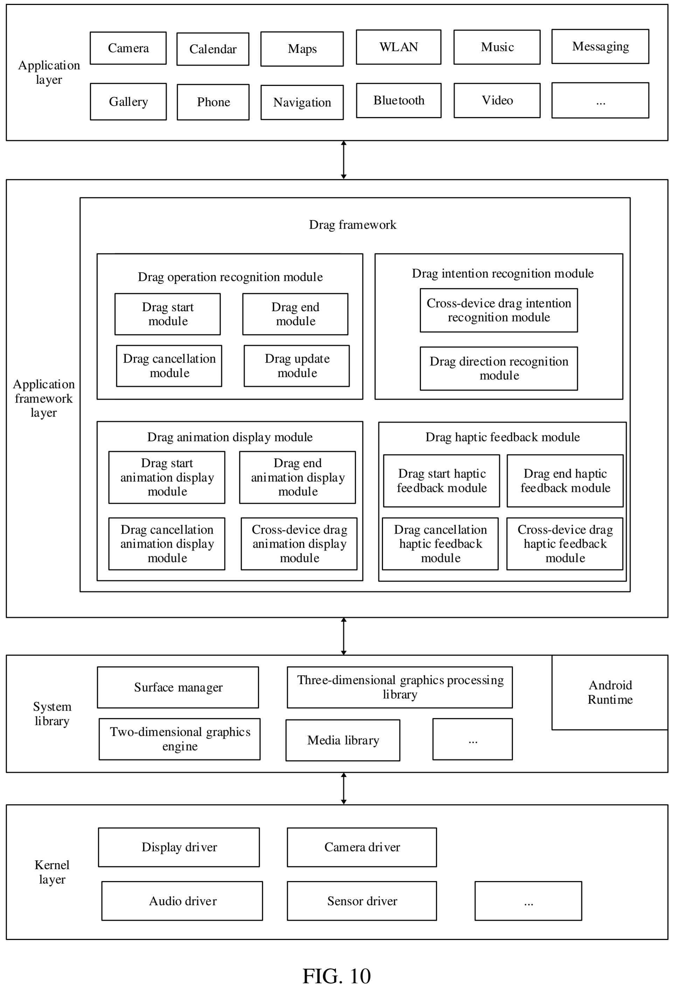

FIG. 10 is a diagram of a system framework according to this application.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate the software structure of the electronic device 100.

FIG. 10 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 10, the application packages may include applications such as camera, gallery, calendar, phone, maps, navigation, WLAN, Bluetooth, music, video, and messaging.

The application framework layer provides an application programming interface (application programming interface, API) and a programming framework for the applications at the application layer. The application framework layer includes some predefined functions.

As shown in FIG. 10, the application framework layer may include a drag framework. The drag framework may be connected to the applications at the application layer to implement drag operation recognition, drag animation display, drag intention recognition, drag haptic display, and the like.

The drag framework may include but is not limited to a drag operation recognition module, a drag intention recognition module, a drag animation display module, a drag haptic feedback module, and the like.

The drag operation recognition module includes but is not limited to a drag start module, a drag end module, a drag cancellation module, and a drag update module.

The drag start module is configured to intercept a drag operation event.

The drag end module is configured to recognize a drag end operation, where the drag end operation may also be referred to as a drag completion operation. The drag end operation may be a user operation of touching and holding first data and dragging the first data after a drag start operation, so that the first data moves to a second application, and stopping touching and holding the first data after the first data moves to the second application, so that the second application receives the first data. Optionally, after the second application receives the first data, the second application may display the first data on a user interface of the second application.

The drag cancellation operation is configured to recognize a drag cancellation operation. The drag cancellation operation may be a user operation of stopping sharing the first data with the second application after the drag start operation.

The drag update module is configured to: when the user drags the first data and the first data passes through another application, send a drag event of the first data to the another application, where the drag event is used by the another application to determine whether the first data shared by the user can be received. In some embodiments, when determining that the first data shared by the user can be received, the another application may further change a display style of an application icon of the another application, to inform the user that the application can receive the first data. In some embodiments, when determining that the first data shared by the user cannot be received, the another application may further change the display style of the application icon of the another application, to inform the user that the application cannot receive the first data. The drag event includes metadata information of the first data, and the metadata information of the first data includes but is not limited to one or more of the following: a data type of the first data, a creation time of the first data, a file size of the first data, an identifier of an application to which the first data belongs, a storage location of the first data, and the like.

The drag intention recognition module includes but is not limited to a cross-device drag intention recognition module and a drag direction recognition module.

The cross-device drag intention recognition module may be configured to determine, based on a moving track of the drag operation, whether the drag operation is a single-device drag operation or a multi-device drag operation.

The drag direction recognition module may be configured to determine a drag direction based on a position relationship in multi-device collaboration, and determine, based on the drag direction, a device with which the first data is shared.

The drag animation display module includes but is not limited to a drag start animation display module, a drag end animation display module, a drag cancellation animation display module, a cross-device drag animation display module, and the like.

The drag start animation display module is configured to display a drag start animation after the drag start operation is recognized.

The drag end animation display module is configured to display a drag end animation after the drag end operation is recognized.

The drag cancellation animation display module is configured to display a drag cancellation animation after the drag cancellation operation is recognized.

The cross-device drag animation display module is configured to display a cross-device drag animation after a cross-device drag operation is recognized.

It should be noted that the drag start animation, the drag end animation, the drag cancellation animation, and the cross-device drag animation may be partially the same, or may be different, or may be all the same. This is not limited in this application. For example, that the drag start animation is different from the drag end animation may mean that an animation display style of a drag start vibration is different from an animation display style of the drag end animation.

The drag haptic feedback module includes but is not limited to a drag start haptic feedback module, a drag end haptic feedback module, a drag cancellation haptic feedback module, and a cross-device drag haptic feedback module.

The drag start haptic feedback module is configured to output a drag start haptic feedback after the drag start operation is recognized.

The drag end haptic feedback module is configured to output a drag end haptic feedback after the drag end operation is recognized.

The drag cancellation haptic feedback module is configured to output a drag cancellation haptic feedback after the drag cancellation operation is recognized.

The cross-device drag haptic feedback module is configured to output a cross-device drag haptic feedback after the cross-device drag operation is recognized.

It should be noted that the drag start haptic feedback, the drag end haptic feedback, the drag cancellation haptic feedback, and the cross-device drag haptic feedback may be partially the same, or may be different, or may be all the same. This is not limited in this application. For example, that the drag start haptic feedback is different from the drag end haptic feedback may mean that a frequency, intensity, duration, and the like of drag start vibration are partially or completely different from a frequency, intensity, duration, and the like of drag end vibration.

The application framework layer may further include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and make the data accessible to an application. The data may include a video, an image, audio, calls that are made and answered, a browsing history and bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering or ending a call, or the like).

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without requiring user interaction. For example, the notification manager is configured to notify download completion, give a message notification, and the like. The notification manager may alternatively present a notification in a top status bar of the system in a form of a graph or a scrolling text, for example, a notification of an application running in the background, or may be a notification that appears on the screen in a form of a dialog window. For example, text information is displayed in the status bar, an alert tone is played, the electronic device vibrates, or the indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, still image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Implementations of this application may be randomly combined to achieve different technical effects.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the foregoing embodiments may be performed. The storage medium includes any medium that can store program code, such as a ROM, a random access memory RAM, a magnetic disk, or an optical disc.

In summary, the foregoing descriptions are merely embodiments of the technical solutions of the present invention, but are not intended to limit the protection scope of the present invention. Any modification, equivalent replacement, improvement, and the like based on the disclosure of the present invention shall fall within the protection scope of the present invention.

## Claims

1. A data dragging method, wherein the method is applied to an electronic device, the electronic device comprises an application layer and an application framework, the application layer comprises a first application, the application framework comprises a first drag framework, and the first drag framework comprises a first drag operation recognition module; and the method comprises:
receiving, by the first application, a first operation on first data in the first application,
wherein the first operation is a drag operation;
sending, by the first application, a first message to the first drag operation recognition module, wherein the first message indicates that the first operation is the drag operation; and
obtaining and saving, by the first drag operation recognition module, first metadata information of the first data in response to the drag operation, wherein the metadata information of the first data comprises any one or more of the following: a first data type of the first data, a creation time of the first data, a file size of the first data, an identifier of the application to which the first data belongs, and a storage location of the first data.

2. The method according to claim 1, wherein after sending the first message, the method further comprises:
in response to the first message, storing, by the first drag operation recognition module, an event type of the first operation as a first event, wherein the first event indicates that the first operation is the drag operation.

3. The method according to claim 1 or 2, wherein the application layer further comprises a second application, and the method further comprises:
receiving, by the second application, a second operation on the second application; and
performing, by the second application, the second operation when the second operation is a non-drag operation.

4. The method according to claim 2, wherein the application layer further comprises a second application, and the method further comprises:
receiving, by the second application, a third operation on the second application;
when the second operation is a drag operation, sending, by the second application, a second message to the first drag operation recognition module, wherein the second message indicates that the second operation is the drag operation; and
determining, by the first drag operation recognition module in response to the second message, that the first event already exists, and skipping performing the third operation.

5. The method according to any one of claims 1 to 4, wherein the first drag framework further comprises a first drag animation display module, and after receiving, by the first application, the first operation on the first data in the first application, the method further comprises:
obtaining and displaying, by the first application, a first picture, wherein the first picture is captured by the first application through screenshotting based on a display style of the first data;
sending, by the first application, the first picture to the first drag operation recognition module;
sending, by the first drag operation recognition module, the first picture to the first drag animation display module; and
controlling, by the first drag animation display module, the first picture to move with the drag operation.

6. The method according to claim 5, wherein the application layer further comprises a second application, and a display area of the second application is a first display area; and after sending the first message, the method further comprises:
when the first icon is located on the first display area, sending, by the first drag operation recognition module, the metadata information of the first data to the second application, wherein the first metadata information is used by the second application to determine whether to receive the first data.

7. The method according to claim 6, wherein after sending, by the first drag operation recognition module, the metadata information of the first data to the second application, the method further comprises:
obtaining, by the second application, a second data type;
obtaining, by the second application, the first data type from the metadata information of the first data; and
when the second data type comprises the first data type, determining, by the second application, to receive the first data.

8. The method according to claim 7, wherein after determining, by the second application, to receive the first data, the method further comprises:
sending, by the second application, a third message to the first drag operation recognition module; and
displaying, by the first drag operation recognition module, the first icon on the first picture in response to the third message, wherein the first icon indicates that the second application is allowed to receive the first data.

9. The method according to claim 7 or 8, wherein the method further comprises:
when the second data type does not comprise the first data type, determining, by the second application, that the first data fails to be received;
after determining that the first data fails to be received, sending, by the second application, a fourth message to the first drag operation recognition module; and
displaying, by the first drag operation recognition module, a second icon on the first picture in response to the fourth message, wherein the second icon indicates that the second application is incapable of receiving the first data, and the second icon is different from the first icon.

10. The method according to any one of claims 7 to 9, wherein the second data type comprises any one or more of the following: a text, a picture, a hyperlink, a video, a file, an icon, a card, and a folder.

11. An electronic device, wherein the electronic device comprises a memory and a processor, the memory is coupled to the processor, the memory is configured to store a computer program, and when the processor invokes the computer program, the electronic device is enabled to perform the method according to any one of claims 1 to 10.

12. A computer-readable storage medium comprising instructions, wherein when the instructions are run on an electronic device, the electronic device is enabled to perform the method according to any one of claims 1 to 10.
